# EUROPEAN PATENT SPECIFICATION

(11) **EP 3 439 306 B1**
(45) Date of publication and mention of the grant of the patent: **30.12.2020**
(21) Application number: 18181558.0
(22) Date of filing: 03.07.2018
(51) Int. Cl.: H04N 19/103, H04N 19/109, H04N 19/12, H04N 19/142, H04N 19/167, H04N 19/17, H04N 19/172, H04N 19/176, H04N 19/537, H04N 19/573, H04N 19/597

(54) **REFERENCE FRAME REPROJECTION FOR VIDEO CODING**
REFERENZRAHMENREPROJEKTION ZUR VIDEOCODIERUNG
REPROJECTION DE TRAME DE RÉFÉRENCE POUR LE CODAGE VIDÉO

(30) Priority: 03.08.2017 US 201715668600
(43) Date of publication of application: 06.02.2019
(73) Proprietor: INTEL Corporation, Santa Clara, CA 95054 (US)
(72) Inventor: RAUT, Aditya, 560075 Bangalore, KA (IN); TANNER, Jason, Folsom, CA California 95630 (US); BOYCE, Jill M., Portland, OR Oregon 97229 (US)
(74) Representative: HGF

(56) References cited:
- EP-A1- 3 249 603
- US-A1- 2002 114 392
- US-A1- 2009 086 814
- LIANG GUOYUAN ET AL: "Affine correspondence based head pose estimation for a sequence of images by using a 3D model", AUTOMATIC FACE AND GESTURE RECOGNITION, 2004. PROCEEDINGS. SIXTH IEEE INTERNATIONAL CONFERENCE ON, IEEE, PISCATAWAY, NJ, USA, 17 May 2004 (2004-05-17), pages 632-637, XP010949504, ISBN: 978-0-7695-2122-0
- PINGPING YAO ET AL: "Using affine correspondence to estimate 3-D facial pose", PROCEEDINGS 2001 INTERNATIONAL CONFERENCE ON IMAGE PROCESSING. ICIP 2001 - THESSALONIKI, GREECE, OCT. 7 - 10, 2001; [INTERNATIONAL CONFERENCE ON IMAGE PROCESSING], INSTITUTE OF ELECTRICAL AND ELECTRONICS ENGINEERS, NEW YORK, NY, vol. 3, 7 October 2001 (2001-10-07), pages 919-922, XP010563501, ISBN: 978-0-7803-6725-8
- ZHOU J Y ET AL: "Video object segmentation and tracking for content-based video coding", MULTIMEDIA AND EXPO, 2000. ICME 2000. 2000 IEEE INTERNATIONAL CONFEREN CE ON NEW YORK, NY, USA 30 JULY-2 AUG. 2000, PISCATAWAY, NJ, USA,IEEE, US, vol. 3, 30 July 2000 (2000-07-30), pages 1555-1558, XP010512803, DOI: 10.1109/ICME.2000.871065 ISBN: 978-0-7803-6536-0
- STEINBACH E ET AL: "Using multiple global motion models for improved block-based video coding", IMAGE PROCESSING, 1999. ICIP 99. PROCEEDINGS. 1999 INTERNATIONAL CONFERENCE ON - KOBE, JAPAN 24-28 OCT. 1999, IEEE, PISCATAWAY, NJ, USA, vol. 2, 24 October 1999 (1999-10-24), pages 56-60, XP010369069, DOI: 10.1109/ICIP.1999.822854 ISBN: 978-0-7803-5467-8

## Description

### BACKGROUND

Existing video codecs such as the H.264 or MPEG-4 Part 10, Advanced Video Coding (AVC) codec, the H.265 High Efficiency Video Coding (HEVC) codec, etc. operate using the principle of motion compensated prediction performed over blocks of variable partition sizes. Such motion estimation and compensation may use block based searches for blocks of a current frame to find best match blocks in one or more reference frames. The best match blocks are referenced using a reference index for the reference frame and a motion vector that indicates motion between the current frame block and the best match block in the reference frame. The reference indices and motion vectors found via motion estimation at the encoder are encoded into a bitstream and transmitted to the decoder. Both the encoder and decoder use such reference indices and motion vectors in motion compensation to reconstruct a frame for further use as a reference frame and for eventual presentment (at the decoder side). Such techniques may be most efficient when the video content being coded is generated based on a single camera model which may pan but has minimal rotation, zoom, distortion, etc. However, content that includes higher levels of rotation, zooming in or out, distortion, etc. may provide difficulty.

Therefore, it may be advantageous to increase the compression efficiency, video quality, and computational efficiency of codec systems for processing video content with rotation, zoom, and other effects. It is with respect to these and other considerations that the present improvements have been needed.

The document Liang Guoyuan et al: "Affine correspondence based head pose estimation for a sequence of images by using a 3D model", Automatic Face and Gesture Recognition, 2004. Proceedings. Sixth IEEE International Conference, IEEE, Piscataway, NJ, USA, 17 May 2004 (2004-05-17), pages 632-637, XP010949504, ISBN: 978-0-7695-2122-0 discloses a method of determining human head poses from a sequence of images, involving estimating affine parameters between a virtual projection and an input view and estimating rotation and translation parameters of the head by a circle-ellipse correspondence technique based on the affine parameters.

The document Steinbach E. et al, "Using multiple global motion models for improved block-based video coding", Image Processing, 1999. ICIP 99. Proceedings, Kobe, Japan 24-28 Oct. 1999, IEEE, Piscataway, NJ, USA, vol. 2, 24 October 1999 (1999-10-24), pages 56-60, XP010369069, DOI: 10.1109 / ICIP.1999.822854, ISBN: 978-0-7803-5467-8 discloses a method of block-based video coding, in which affine motion models are used as warping parameters approximating a motion vector field.

The invention is set out in the appended set of claims; the further examples called embodiments in the description are illustrative examples.

### BRIEF DESCRIPTION OF THE DRAWINGS

The material described herein is illustrated by way of example and not by way of limitation in the accompanying figures. For simplicity and clarity of illustration, elements illustrated in the figures are not necessarily drawn to scale. For example, the dimensions of some elements may be exaggerated relative to other elements for clarity. Further, where considered appropriate, reference labels have been repeated among the figures to indicate corresponding or analogous elements. In the figures:
FIG. 1 is an illustrative diagram of an example context for video coding using reprojected reconstructed reference frames;
FIG. 2 is an illustrative diagram of an example encoder for video encoding using reprojected reconstructed reference frames;
FIG. 3 illustrates a block diagram of an example decoder for video decoding using reprojected reconstructed reference frames;
FIG. 4 is a flow diagram illustrating an example process for coding video using reprojected reconstructed reference frames;
FIG. 5 is a flow diagram illustrating an example process for conditionally applying frame reprojection based on evaluating scene pose difference data;
FIG. 6 illustrates an example of multiple reprojected reconstructed reference frames for use in video coding;
FIG. 7 illustrates example post processing of a reprojected reconstructed reference frame after a zoom in operation;
FIG. 8 illustrates example post processing of a reprojected reconstructed reference frame after a zoom out operation;
FIG. 9 illustrates an example projective transform applied only to a region of interest;
FIG. 10 is a flow diagram illustrating an example process for video coding using reprojected reconstructed reference frames;
FIG. 11 is an illustrative diagram of an example system for video coding using reprojected reconstructed reference frames;
FIG. 12 is an illustrative diagram of an example system; and
FIG. 13 illustrates an example small form factor device, all arranged in accordance with at least some implementations of the present disclosure.

### DETAILED DESCRIPTION

One or more embodiments or implementations are now described with reference to the enclosed figures. While specific configurations and arrangements are discussed, it should be understood that this is done for illustrative purposes only. It will be apparent to those skilled in the relevant art that techniques and/or arrangements described herein may also be employed in a variety of other systems and applications other than what is described herein.

While the following description sets forth various implementations that may be manifested in architectures such as system-on-a-chip (SoC) architectures for example, implementation of the techniques and/or arrangements described herein are not restricted to particular architectures and/or computing systems and may be implemented by any architecture and/or computing system for similar purposes. For instance, various architectures employing, for example, multiple integrated circuit (IC) chips and/or packages, and/or various computing devices and/or consumer electronic (CE) devices such as set top boxes, smart phones, etc., may implement the techniques and/or arrangements described herein. Further, while the following description may set forth numerous specific details such as logic implementations, types and interrelationships of system components, logic partitioning/integration choices, etc., claimed subject matter may be practiced without such specific details. In other instances, some material such as, for example, control structures and full software instruction sequences, may not be shown in detail in order not to obscure the material disclosed herein.

The material disclosed herein may be implemented in hardware, firmware, software, or any combination thereof. The material disclosed herein may also be implemented as instructions stored on a machine-readable medium, which may be read and executed by one or more processors. A machine-readable medium may include any medium and/or mechanism for storing or transmitting information in a form readable by a machine (e.g., a computing device). For example, a machine-readable medium may include read only memory (ROM); random access memory (RAM); magnetic disk storage media; optical storage media; flash memory devices; electrical, optical, acoustical or other forms of propagated signals (e.g., carrier waves, infrared signals, digital signals, etc.), and others.

References in the specification to "one implementation", "an implementation", "an example implementation", etc., indicate that the implementation described may include a particular feature, structure, or characteristic, but every embodiment may not necessarily include the particular feature, structure, or characteristic. Moreover, such phrases are not necessarily referring to the same implementation. Further, when a particular feature, structure, or characteristic is described in connection with an embodiment, it is submitted that it is within the knowledge of one skilled in the art to effect such feature, structure, or characteristic in connection with other implementations whether or not explicitly described herein.

Methods, devices, apparatuses, computing platforms, and articles are described herein related to video coding and, in particular, to reprojecting reconstructed video frames to provide reprojected reconstructed reference frames for motion estimation and motion compensation.

As discussed, current motion estimation and motion compensation techniques use reference frames for searching blocks of a current frame for best matches. Such motion estimation and motion compensation compresses temporally redundant information for improved coding efficiency. However, such techniques may be of limited use when the video content being coded includes higher levels of rotation, zooming in or out, distortion, etc. For example, in the context of virtual reality, augmented reality, portable devices, and the like, the device may frequently move in a variety of directions (e.g., with 6 degrees of freedom: up/down, forward/back, left/right, roll, yaw, pitch). In such contexts, video capture and/or video generation may provide sequences of frames that have complex motion therebetween (e.g., pan, rotation, zoom, distortion, etc.).

In some embodiments discussed herein, a reconstructed reference frame corresponding to a first scene pose (e.g., a view of the scene at or about the time the reference frame was captured/generated) may be transformed with a projective transformation based on scene pose difference data indicative of a scene pose change from the first scene pose to a second scene pose subsequent to the first scene pose. The second scene pose corresponds to a view of the scene at or about the time the current frame was captured or at or about the time for which the current frame was generated or rendered. Such scene pose difference data provides data outside of the frames being coded (e.g., metadata) indicative of changes in the scene pose between the reference frame and the current frame being coded. As used herein the term scene pose is used to indicate a pose of the scene in relation to a viewpoint or viewport that is capturing the scene. In the context of virtual reality, the scene pose indicates the pose or view of the scene being generated in relation to the viewpoint of the user of the virtual reality (VR) device (e.g., the user wearing a VR headset). In the context of an image capture device (e.g., the camera of a handheld device, head mounted device, or the like), the scene pose indicates the pose or view of the scene being captured by the image capture device. In the context of augmented reality (AR), the scene pose indicates the pose or view of the scene being analyzed (e.g., by an image capture device) and the pose of any information (e.g., overlay information, images, etc.) generated with respect to the scene.

The scene pose difference data may be leveraged by applying a projective transformation to the reconstructed reference frame to generate a reprojected reconstructed reference frame. As used herein the term projective transformation indicates a transform that does not necessarily preserve parallelism, length, and angle between the input frame and output frame. Such projective transformations may be contrasted with affine transformations which preserves parallelism, length, and angle and therefore are more limited in capturing complex scene pose changes. The scene pose difference data may be any suitable data or information indicative of scene pose changes such as 6 degrees of freedom (6-DOF) differential or delta information, a transform or transformation matrix, a motion vector field, or the like. Furthermore, the projective transformation may be performed using any suitable technique or techniques depending on the format of the scene pose difference data. As is discussed further herein, after applying the projective transformation, further techniques may be used to adapt the resultant frame to the size and shape of the reconstructed reference frame for use in motion estimation and/or motion compensation.

The reprojected reconstructed reference frame is then used in motion estimation (at an encoder) and/or motion compensation (at an encoder or decoder) to generate motion information (e.g., motion vectors generated at the encoder) and/or a reconstructed current frame corresponding to the current frame being coded. For example, the reconstructed current frame is generated in loop at the encoder (e.g., with in a local decode loop at the encoder) for use in motion estimation/compensation for subsequent frames. The reconstructed current frame is also generated at the decoder for use in motion compensation for subsequent frames and/or for eventual presentment to a user. Such techniques provide a closer match between the current frame being coded and the reference frame (e.g., the reprojected reconstructed reference frame) being used for motion estimation/compensation, which improves coding efficiency. Such advantages and others will be apparent to one of skill in the art based on the discussion herein. Furthermore, the discussed techniques may be used in any suitable coding context such as in the implementation of H.264/MPEG-4 advanced video coding (AVC) standards based codecs, high efficiency video coding (H.265/HEVC) standards based codecs, proposed video coding (H.266) codecs, Alliance for Open Media (AOM) standards based codecs such as the AV1 standard, MPEG standards based codecs such as the MPEG-4 standard, VP9 standards based codecs, or any other suitable codec or extension or profile thereof.

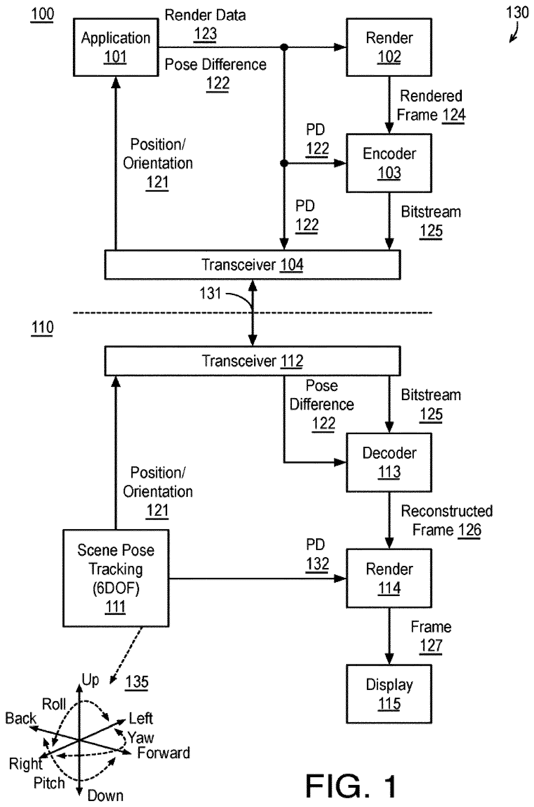

FIG. 1 is an illustrative diagram of an example context 130 for video coding using reprojected reconstructed reference frames, arranged in accordance with at least some implementations of the present disclosure. As shown in FIG. 1, context 130 may include an system 100 and a system 110, which are communicatively coupled by a communications link 131. In an embodiment, context 130 is a virtual reality context that includes system 100 as a host system that generates virtual reality frames (e.g., of gaming content, entertainment content, or the like), which are encoded and transmitted to system 110. In such a context, system 110 may be characterized as a sink or the like and system 110 may be a head mounted display (HMD) including optics (not shown) that provide a user a 3-dimensional (3D) effect when viewing frames presented via display 115.

As will be appreciated, in such contexts, system 110 may often be moving in 3-dimensional (3D) space as the user moves to view different portions of the virtual scene, to interact with the virtual content, etc. Therefore, system 110 may move throughout 3D space with motion characterized as 6-DOF motion 135, which shows system 110 may move with translation: forward/back (e.g., in an x-direction), up/down (e.g., in a y-direction), right/left (e.g., in a z-direction) and rotation: rotating with yaw (e.g., angle α around the z-axis), roll (e.g., angle β around the y-axis), and pitch (e.g., angle γ around the y-axis). As will be appreciated, 3D content such as VR frames may be generated based on a presumed line of vision (e.g., along the forward direction of the x-axis) of the user of system 110.

Although discussed with respect to VR video frames and content, context 130, system 100, system 110, and other systems discussed herein may operate on frames or pictures including any suitable content. In some embodiments, the discussed techniques may be applied to wireless virtual reality (VR), augmented reality (AR), mixed reality (MR), or the like using outside-in or inside-out 6-DOF data or information. In some embodiments, the discussed techniques may be applied to cameras, smartphones having a camera, or the like such that the camera or smartphone includes an integrated inertial measurement unit (IMU) providing 3-DOF data or information. In some embodiments, the discussed techniques may be applied to security cameras or the like having the capability of providing pan-tilt-zoom (PTZ) control data or information. In some embodiments, the discussed techniques may be applied to cloud gaming or entertainment services with a virtual camera orientation with the capability of providing translational data or information, 6-DOF data or information, or the like.

As shown, system 110 may include a scene pose tracking module 111, a transceiver 112, a decoder 113, a render module 114, and a display 115. Furthermore, system 100 may include an application module 101, a render module 102, an encoder 103, and a transceiver 104. Continuing with discussion, without limitation of a VR context, a user wears system 110 as a head mounted display. As the user moves, the user's perspective of the scene (e.g., the view pose) changes with the user movement. Furthermore, system 110 and system 100 are communicatively coupled by communications link 131, which may be a wireless link (e.g., WiFi, WiGiG, etc.) or a wired connection (e.g., a universal serial bus coupling, a transport agnostic display coupling, etc.). As the user moves, scene pose tracking module 111 tracks the location and orientation of system 110. As shown, such position and orientation data 121 is provided to system 100 (via communications link 131 between transceivers 104, 112). Such position and orientation data 121 may be provided in any suitable format such as 6-DOF data (e.g., e.g., x, y, z, α, β, and γ values relative to an initialized zero position), 6-DOF difference data with respect to a prior known 6-DOF position (e.g. Δx, Δy, Δz, Δα, Δβ, and Δγ values), 3-DOF data (e.g., e.g., x, y, z values relative to an initialized zero position), 3-DOF difference data respect to a prior known 6-DOF position (e.g. Δx, Δy, Δz values), or the like. Furthermore, although discussed with respect to 6-DOF and 3-DOF positional and orientation information, any number of degrees of freedom in any combination may be implemented.

As shown, application module 101 (which may be running on a central processing unit of system 100) receives position and orientation data 121 as metadata. The most recent metadata (e.g., P_{curr}) indicating the current scene pose is used by application module 101 to generate render data 123, which will be used to render a current frame. For example, application module 101 may be running a game application, an entertainment application, or the like that is responsive to position and orientation data 121 in generating render data 123. For example, as a user of system 110 moves and/or interacts with a virtual scene, position and orientation data 121 and/or other input data are used to generate the user's next view of the virtual scene. As shown, render module 102 generates a rendered frame 124 using render data 123. For example, render module 102 may implement a rendering pipeline via a graphics processing unit or the like to generate rendered frame 124 based on render data 123.

Also as shown, system 100 generates pose difference data 122 via application module 101 or another module or component thereof. As discussed, in some examples, pose difference data 122 may be provided via position and orientation data 121. In any event, pose difference data 122 indicates a scene pose difference between a scene pose corresponding to a reconstructed reference frame (e.g., a frame prior to rendered frame 124) that has been previously coded and a scene pose corresponding to rendered frame 124 (e.g., a current frame). As discussed, pose difference data 122 may include any suitable data or information indicative of a scene pose change between frames, time instances, or the like. In an embodiment, pose difference data 122 is indicated as a scene pose difference metadata. For example, for a scene pose corresponding to rendered frame 124 (e.g., a current frame), P_{curr}, and a scene pose corresponding to a reconstructed reference frame in encoder 103 (e.g., in a frame buffer of encoder 103), P_{ref}, pose difference data 122 provides a difference between the scene poses: ΔP= P_{ref} - P_{curr}. For example, ΔP may provide 6-DOF difference data with respect to a prior known 6-DOF position (e.g., Δx, Δy, Δz, Δα, Δβ, and Δγ values)

As is discussed further herein, a transformation such as a projective transformation is applied to the reconstructed reference frame (as generated by encoder 103 as is discussed further herein) based on pose difference data 122 (along with other techniques as needed) to generate a reprojected reconstructed reference frame. As used herein, the term reprojected in the context of a reprojected frame indicates a frame (e.g., with a first scene pose or projection) has been transformed to another scene pose or projection using pose difference data 122. The reprojected reconstructed reference frame is then used as a motion estimation and motion compensation reference frame for the encoding of rendered frame 124 to generate at least a portion of bitstream 125. For example, motion estimation as performed by encoder 103 may include a block based search for blocks of rendered frame 124 by searching the reprojected reconstructed reference frame. The motion vectors generated by such motion estimation (e.g., a motion vector field) are then used to reconstruct rendered frame 124 for use as a reference frame by encoder 103. Furthermore, the motion vectors as well as transformed and quantized prediction residuals (e.g., residuals between the original blocks of rendered frame 124 and referenced blocks of the reprojected reconstructed reference frame) are encoded into a bitstream 125, which is transmitted via communication link 131 to system 110.

In some embodiments, the relative timing of the render of rendered frame 124 from render data 123 and the transformation of the reconstructed reference frame based on pose difference data 122 provides for at least partially simultaneously rendering rendered frame 124 and transforming the reconstructed reference frame such that at least part of the operations are performed at the same time. Such simultaneous rendering and transformations may provide decreased delay in the processing pipeline of system 100.

As shown, at system 110, pose difference data 122 is provided to decoder 113. As shown, in some embodiments, pose difference data 122 is received from system 100 via communication link 131. In some embodiments, pose difference data 122 is provided by position and orientation data 121 from scene pose tracking module 111. In some embodiments, pose difference data 122 is provided separate of position and orientation data 121 from scene pose tracking module 111 or another module or component of system 110. In an embodiment, pose difference data 122 may be provided via bitstream 125. For example, such pose difference data 122 may be standardized as metadata describing a reprojection of the reconstructed reference frame and included in bitstream 125. The pose difference data 122 (e.g., metadata) may have any suitable format and may be further compressed for inclusion in bitstream 125. In some embodiments, system 100 may modify pose difference data 122 prior to pose difference data 122 being provided to system 110. In any event, pose difference data 122 as provided to encoder 103 and decoder 113 must be the same (or at least provide for implementation of the same reconstructed reference frame reprojection) and it must be applied in the same manner to the same reconstructed reference frame such that encoder 103 and decoder 113 generate the same reprojected reconstructed reference frame. Otherwise, during motion compensation, encoder 103 and decoder 113 would be referencing different frames and the coding would be corrupted.

Decoder 113 applies pose difference data 122 to the reconstructed reference frame to generate a reprojected reconstructed reference frame (e.g., the reprojected reconstructed reference frame discussed above with respect to encoder 103). System 110 receives, via communication link 131, bitstream 125 and decoder 113 decodes bitstream 125 to determine the motion vectors and transformed and quantized prediction residuals corresponding to rendered frame 124 as discussed above. Decoder 113 then inverse quantizes and inverse transforms the transformed and quantized prediction residuals and uses the motion vectors to determine the reference blocks of the reprojected reconstructed reference frame. The reconstructed (e.g., inverse quantized and transformed) prediction residuals and corresponding reference blocks are then added to form reconstructed blocks, which may be combined with other reconstructed blocks as well as optional intra prediction reconstructed blocks to provide a reconstructed frame, which may be optionally deblock filtered to generate a reconstructed frame 126, which is a reconstruction of rendered frame 124. Reconstructed frame 126 is provided to render module 114, which may be implemented by a graphics processing unit of system 110, along with pose difference (PD) data 132, which provides even more up to date scene pose information such that render module 114 reprojects or warps reconstructed frame based on pose difference data 132 to provide a final frame 127 for display via display 115 and presentment to a user.

Thereby, context 130 provides for a head mounted display (e.g., system 110) communicatively coupled via communication link 131 to a host (e.g., system 100). System 110 transmits tracking information (e.g., position and orientation data 121) from scene pose tracking module 111 (e.g., a 6-DOF system) such that position and orientation data 121 may include positional and orientation data of system 110. An application (e.g., game, entertainment application, etc.) running on application module 101 of system 100 receives the tracking information as metadata. The most recent metadata (scene pose information, P_{curr}) is used to render a rendered frame (e.g., by the application providing render data 123 to render module 102 to generate rendered frame 124) and to reproject a reconstructed reference frame having previous scene pose information, P_{ref}. For example, a scene pose difference or scene pose difference data (e.g., ΔP= P_{ref} - P_{curr}) is used for reprojection of the reconstructed reference frame by encoder 103 (or another module or component of system 100).

Such pose difference data 122 (as received from system 100 or as generated at system 110) is also used by decoder 113 to reproject the reconstructed reference frame. Rendered frame 124 is encoded using the reprojected reconstructed reference frame by encoder 103 to generate bitstream 125, which is transmitted to system 110. The reprojected reconstructed reference frame at decoder 113 and information from bitstream 125 are used to decode reconstructed frame 126 (which corresponds to rendered frame 124). Reconstructed frame 126 is provided to render module 114 along with pose difference data 132 and a final reprojection based on the most recent head pose, lens distortion and correction (if applied) is performed and the resultant frame 127 is sent for display.

As discussed, in some embodiments, tracked position and orientation data 121 is used to generate pose difference data 122. In an embodiment, scene pose prediction may be used to generate the subsequent scene pose data (e.g., used for frame rendering) and/or pose difference data 122. For example, the latency between the measurement of position and orientation data 121, the rendering of rendered frame 124, and the display of frame 127 may provide an undesirable user interface (e.g., artifacts, lag times, etc.), which may be at least partially resolved using scene pose prediction. Such scene pose prediction may be performed using any suitable technique or techniques. For example, the most recent or subsequent scene pose data (or scene pose difference data) may be generated based on extrapolating from a previous scene pose using a previously known scene pose difference. In an embodiment, the scene pose data corresponding to the reconstructed reference frame and subsequent scene pose data (e.g., from scene pose tracking module 111) may be used to extrapolate scene pose data that is further subsequent to the measured scene pose data. For example, a processing time may be determined such the processing time includes a summation of the time to generate render data 123, the render time for rendering rendered frame 124 (e.g., a render complexity), encode time for the generation of bitstream 125, a data transmission time across communication link 131 for communicating bitstream 125, and/or a decode time for generation of reconstructed frame 126. The processing time may be approximated or determined by measuring such times during the operation of system 100 and/or system 110.

Using the pose difference between a known first scene pose at a first time instance and a known second scene pose at a second time instance subsequent to the first time instance, a pose instance for a time instance at the second time instance plus the processing time (e.g., at a third time instance) may be determined using extrapolation techniques. For example, the scene pose difference between the first and second time instances may be linearly extrapolated to a scene pose difference at the third time instance. For example, the extrapolated scene pose may be provided as: P₃ =P₂ + (P₂ - P₁)^{∗}(t₃ - t₂)/(t₂ - t₁) such that P₃ is the extrapolated scene pose at time t₃, P₂ is the scene pose at time t₂, and P₁ is the scene pose at time t₁. In an embodiment, to reduce the chances of overshoot of the pose difference when extrapolating from the second to the third time instances, the extrapolation may be multiplied by a predetermined factor (such as 2/3 or 1/2 or the like) to reduce the linear extrapolation (e.g., P₃ =P₂ + k^{∗}(P₂ - P₁)^{∗}(t₃ - t₂)/(t₂ - t₁), where k is the predetermined factor). Such a predicted or extrapolated scene pose (e.g., P₃) and/or scene pose difference data (e.g., P₃ - P₁) may then be used throughout the discussed processing pipeline (e.g., at application module 101, render module 102, encoder 103, and decoder 103) as discussed above.

Furthermore, as discussed with respect to render module 114, reprojection of reconstructed frame 126 may be performed at a final frame buffer (not shown) just before presentment via display 115. Such reprojection may be based on the difference between the predicted or extrapolated scene pose head pose used for render and the most recent available scene pose at the time of display from scene pose tracking module 111 and such reprojections may further mitigate the discussed undesirable user interface effects.

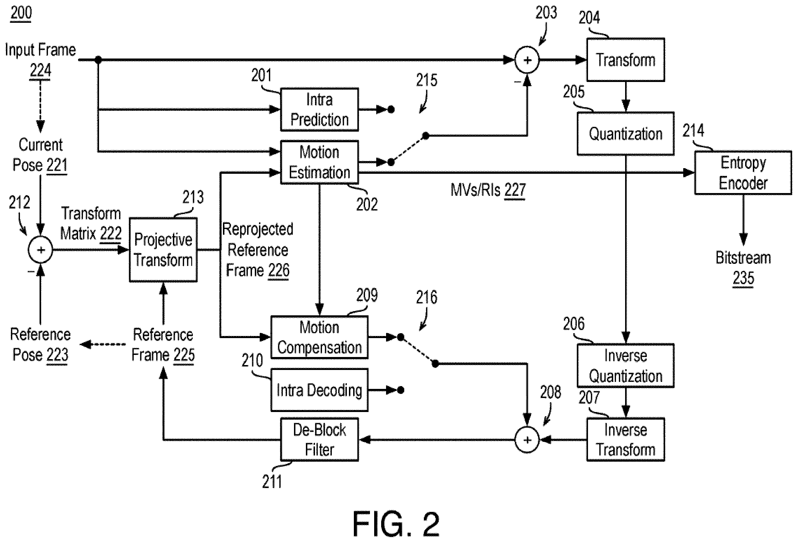

FIG. 2 is an illustrative diagram of an example encoder 200 for video encoding using reprojected reconstructed reference frames, arranged in accordance with at least some implementations of the present disclosure. For example, encoder 200 may be implemented as encoder 103 in system 100. As shown in FIG. 2, encoder 200 may include a projective transform module 213, a differencer 212, an intra prediction module 201, a motion estimation module 202, a differencer 203, a transform module 204, a quantization module 205, an entropy encoder 214, an inverse quantization module 206, an inverse transform module 207, an adder 208, a motion compensation module 209, an intra decoding module 210, switches 215, 216, and a deblock filtering module 211. Encoder 200 may include additional modules and/or interconnections that are not shown for the sake of clarity of presentation.

As shown, encoder 200 receives an input frame 224 having a current scene pose 221 corresponding thereto and encoder 200 has previously generated a reconstructed reference frame 225 corresponding to a reference scene pose 223 such that current scene pose 221 is subsequent in time with respect to reference scene pose 223. As discussed, current scene pose 221 may be a measured scene pose (e.g., by scene pose tracking module 111) or a predicted scene pose (e.g., predicted using extrapolation or the like). As will be appreciated, although current scene pose 221 corresponds to input frame 224 and reference scene pose 223 corresponds to reconstructed reference frame 225, the timing or time instances of such scene poses (e.g., the measurement time) and the frames (e.g., the time they are presented) may be the same or different. Input frame 224 (or input frames) may include any suitable format of frames or pictures of a video sequence. For example, input frame 224 may be a frame of a video sequence of any number of video frames. Such frames may be in any suitable format and may include any suitable content such as VR frames or content, AR frames or content, MR frames or content, captured image frames (e.g., via a mobile camera device, security camera, etc.), or the like. The frames may be divided into or include segments or planes that permit parallel processing and/or separate the video data into different color components. For example, a frame of color video data may include a luminance plane or component and two chrominance planes or components at the same or different resolutions with respect to the luminance plane. Input frame 224 may be divided into blocks of any size, which contain data corresponding to, for example, MxN blocks of pixels. Such blocks may include data from one or more planes or color channels of pixel data. As used herein, the term block may include macroblocks, coding units, or the like of any suitable sizes. As will be appreciated such blocks may also be divided into subblocks for prediction, transform, or the like.

As shown, a difference between a current scene pose 221 and reference scene pose 223 may be determined by differencer 212 to generate scene pose difference data, which in the context of encoder 200 is provided by a transform matrix 222. For example, 6-DOF scene pose difference data (e.g., e.g., Δx, Δy, Δz, Δα, Δβ, and Δγ values) may be translated to transform matrix 222 using known techniques such that transform matrix 222 provides a projective transformation from current scene pose 221 to reference scene pose 223 when applied to reconstructed reference frame 225. As shown, transform matrix 222 may be applied to reconstructed reference frame 225 by projective transform module 213 to generate a reprojected reconstructed reference frame 226. Reprojected reconstructed reference frame 226 is provided to motion estimation module 202 and motion compensation module 209. In the illustrated example, differencer 212 generates scene pose difference data. In other examples, encoder 200 may receive such scene pose difference data as transform matrix 222 or in any other suitable format.

As discussed, input frame 224 is provided for encoding by encoder 200. In the context of system 100, input frame 224 maybe rendered frame 124. However, as discussed herein, input frame 224 may be any suitable frame for encoding such as an input image or frame captured by an image capture device, a rendered frame, an augmented reality frame, etc. As shown, input frame 224 may be encoded in part based on reprojected reconstructed reference frame 226 to generate bitstream 235. For example, in the context of encoder 100, bitstream 235 may correspond to bitstream 125. Bitstream 235 may have any suitable format such as a standards (e.g., AVC, HEVC, etc.) compliant format.

For example, encoder 200 may divide input frame 224 into blocks of different sizes, which may be predicted either temporally (inter) via motion estimation module 202 and motion compensation module 209 or spatially (intra) via intra prediction module 201. Such a coding decision may be implemented via selection switch 215 under the control of an encode controller (not shown). As shown, motion estimation module 202 may use reprojected reconstructed reference frame 226 as a motion compensation reference frame. That is, motion estimation module 202 may search, using a block of input frame 224, reprojected reconstructed reference frame 226 (and other motion compensation reference frame, if used) for a best match block and may reference the best match block using a reference index to the reprojected reconstructed reference frame 226 and a motion vector. The reference index may be used when more that one motion compensation reference frames are used for motion search to indicate the motion compensation reference frame used for the block. When only one motion compensation reference frames (e.g., reprojected reconstructed reference frame 226) is used, the reference index may be omitted. The motion vectors for such blocks and reference indices, if needed, are provided as motion vectors and reference indices 227 from motion estimation module 202 for encoding via entropy encoder 214 into bitstream 235.

As discussed, reprojected reconstructed reference frame 226 is used as a motion compensation reference frame via motion estimation module 202 and motion compensation module 209 (and via motion compensation module 309 of decoder 300 discussed herein below). In an embodiment, only reprojected reconstructed reference frame 226 is used as a motion compensation reference frame. In other embodiments, reprojected reconstructed reference frame 226 and other frames are used as motion compensation reference frames. In an embodiment, reprojected reconstructed reference frame 226 may be used in place of a standards based reconstructed reference frame such that reprojected reconstructed reference frame 226 takes the place of the reconstructed reference frame and all other coding may be standards compliant. In another embodiment, reprojected reconstructed reference frame 226 may be added to available frames and an extension of the standard may be required such that an indicator or the like of reprojected reconstructed reference frame 226 may be provided via bitstream 235.

In an embodiment, both reprojected reconstructed reference frame 226 and reconstructed reference frame 225 are used as motion compensation reference frames. For example, motion estimation module 202 may perform motion estimation for input frame 224 on a block by block basis using both reconstructed reference frame 225 and reprojected reconstructed reference frame 226 as motion estimation reference frames such that a first block of input frame 224 references reconstructed reference frame 225 (e.g., via a reference index and a motion vector) for motion compensation and a second block of input frame 224 references reprojected reconstructed reference frame 226 (e.g., via a different reference index and another motion vector) for motion compensation.

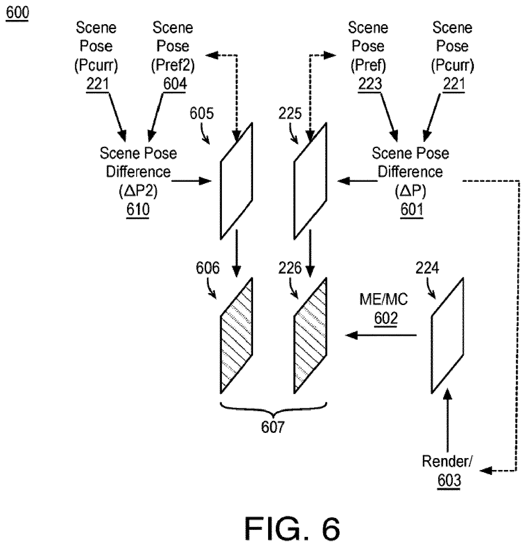

Furthermore, although discussed with respect to generating one reprojected reconstructed reference frame 226, one or more additional reprojected reconstructed reference frames may be generated based on different transform matrices being applied to reconstructed reference frame 225. For example, multiple projective transformations may be applied (each with different scene pose difference data assumptions) to generate multiple reprojected reconstructed reference frames that may all be provided to motion estimation module 202 and motion compensation module 209 (and motion compensation module 309) for use in motion compensation. When a block references a particular reprojected reconstructed reference frame of the reprojected reconstructed reference frames, such reference may be indicated by the reference indices of motion vectors and reference indices 227. For example, a first reprojected reconstructed reference frame generated by applying a first projective transformation to reconstructed reference frame 225 (e.g., using scene pose difference data between reconstructed reference frame 225 and input frame 224) and a second reprojected reconstructed reference frame generated by applying a second projective transformation to reconstructed reference frame 225 (e.g., using scene pose difference data between reconstructed reference frame 225 and a frame prior to input frame 224) may both be used as motion compensation reference frames. Alternatively or in addition, one or more projective transformations may be applied to other reconstructed reference frames (e.g., further past reconstructed reference frames) to generate one or more reprojected reconstructed reference frames as is discussed further herein with respect to FIG. 6.

With continued reference to FIG. 2, based on the use of intra or inter coding, a difference between source pixels of each block of input frame 224 and predicted pixels for each block may be made via differencer 203 (e.g., between pixels of input frame 224 and reprojected reconstructed reference frame 226 when reprojected reconstructed reference frame 226 is used as a motion compensation reference frame as shown or using pixels of other motion compensation reference frames) to generated a predicted residual for the block. The difference or predicted residual is converted to the frequency domain (e.g., based on a discrete cosine transform or the like) via transform module 204 and converted to quantized coefficients via quantization module 205. Such quantized coefficients, motion vectors and reference indices 227, and various control signals may be entropy encoded via entropy encoder 214 to generate encoded bitstream 235, which may be transmitted or transferred or the like to a decoder.

Furthermore, as part of a local decode loop, the quantized predicted residual coefficients may be inverse quantized via inverse quantization module 206 and inverse transformed via inverse transform module 207 to generate reconstructed differences or residuals. The reconstructed differences or residuals may be combined with reference blocks from motion compensation module 209 (which may use pixels from reprojected reconstructed reference frame 226 when reprojected reconstructed reference frame 226 is used as a motion compensation reference frame as shown or using pixels of other motion compensation reference frames) or intra decoding module 210 via adder 208 to generate reconstructed blocks, which, as shown, may be provided to deblock filtering module 211 for deblock filtering to provide a reconstructed reference frame for use by another input frame. For example, the reconstructed reference frame (such as reconstructed reference frame 225) may be stored in a frame buffer.

Thereby, encoder 200 may more efficiently code input frame 224 using reprojected reconstructed reference frame 226 relative to using reconstructed reference frame 225 alone. Example results of such coding efficiencies are discussed further herein with respect to Table 1. Bitstream 235 may then be stored, transmitted to a remote device, or the like for subsequent decoding to generate a reconstructed frame corresponding to input frame 224 for presentment to a user.

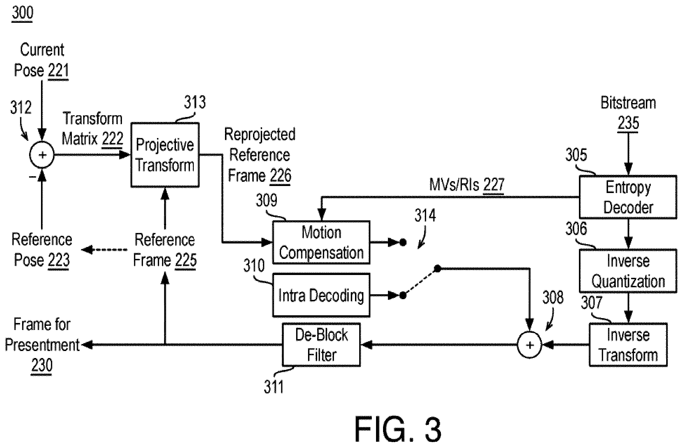

FIG. 3 illustrates a block diagram of an example decoder 300 for video decoding using reprojected reconstructed reference frames, arranged in accordance with at least some implementations of the present disclosure. For example, decoder 300 may be implemented as decoder 113 in system 110. As shown, decoder 300 may include a projective transform module 313, a differencer 312, an entropy decoder 305, an inverse quantization module 306, an inverse transform module 307, an adder 308, a motion compensation module 309, an intra decoding module 310, a switch 314, and a deblock filtering module 311. Decoder 300 may include additional modules and/or interconnections that are not shown for the sake of clarity of presentation.

As shown, decoder 300 may receive current scene pose 221, reference scene pose 223, and input bitstream 235 (e.g., an input bitstream corresponding to or representing video frames encoded using one or more reprojected reconstructed reference frames) and decoder 300 may generate frames for presentment 230. For example, decoder 300 may receive input bitstream 235, which may have any suitable format such as a standards (e.g., AVC, HEVC, etc.) compliant format. As discussed with respect to encoder 200, a difference between current scene pose 221 and reference scene pose 223 may be determined by differencer 312 to generate scene pose difference data, which in the context of encoder 200 and decoder 300 is provided by transform matrix 222. As discussed, 6-DOF scene pose difference data may be translated to transform matrix 222 using known techniques such that transform matrix 222 provides a projective transformation from current scene pose 221 to reference scene pose 223 when applied to reconstructed reference frame 225. Transform matrix 222 may be applied to reconstructed reference frame 225 by projective transform module 313 to generate a reprojected reconstructed reference frame 226. As shown, reprojected reconstructed reference frame 226 is provided to motion compensation module 309. In the illustrated example, differencer 312 generates scene pose difference data. In other examples, decoder 300 may receive such scene pose difference data as transform matrix 222 or in any other suitable format. In an embodiment, decoder 300 receives such scene pose difference data by decoding a portion of bitstream 235.

For example, decoder 300 may receive bitstream 235 via entropy decoder 305, which may decode motion vectors and reference indices 227 and block based quantized predicted residual coefficients from bitstream 235. As shown, motion vectors and reference indices 227 are provided to motion compensation module 309. The quantized prediction residual coefficients are inverse quantized via inverse quantization module 306 and inverse transformed via inverse transform module 307 to generate reconstructed block based differences or residuals (e.g., prediction residual blocks). The reconstructed differences or residuals are combined with reference blocks from motion compensation module 309 (which may use pixels from reprojected reconstructed reference frame 226 or using pixels of other motion compensation reference frames) or intra decoding module 310 via adder 308 to generate reconstructed blocks. For example, for each block, one of motion compensation module 309 or intra decoding module 310 may provide a reference block for adding to the corresponding reconstructed differences or residuals for the block under control of switch 314, which is controlled by control signals decoded form bitstream 235. As shown, the reconstructed blocks are provided to deblock filtering module 311 for deblock filtering to provide a reconstructed reference frame for use by another input frame and for presentment to a user (if desired). For example, the reconstructed reference frame (such as reconstructed reference frame 225) may be stored in a frame buffer for use in decoding other frames and for eventual presentment to a user. For example, frame for presentment 230 may be directly sent to a display or it may be sent for addition reprojection as discussed with respect to render module 114.

As discussed, reprojected reconstructed reference frame 226 is used as a motion compensation reference frame via motion compensation module 309. In an embodiment, only reprojected reconstructed reference frame 226 is used as a motion compensation reference frame. In other embodiments, reprojected reconstructed reference frame 226 and other frames are used as motion compensation reference frames. As discussed, reprojected reconstructed reference frame 226 may be used in place of a standards based reconstructed reference frame such that reprojected reconstructed reference frame 226 takes the place of the reconstructed reference frame and all other coding may be standards compliant. In another embodiment, reprojected reconstructed reference frame 226 may be added to available frames and an extension of the standard may be required such that an indicator or the like of reprojected reconstructed reference frame 226 may be provided via bitstream 235.

In an embodiment, both reprojected reconstructed reference frame 226 and reconstructed reference frame 225 are used as motion compensation reference frames. For example, motion compensation module 309 may perform motion compensation by retrieving pixel data from reprojected reconstructed reference frame 226 and/or reconstructed reference frame 225 under the control of motion vectors and reference indices 227. Furthermore, although discussed with respect to generating one reprojected reconstructed reference frame 226, one or more additional reprojected reconstructed reference frames may be generated based on different transform matrices being applied to reconstructed reference frame 225. For example, multiple projective transformations may be applied (each with different scene pose difference data assumptions) to generate multiple reprojected reconstructed reference frames that may all be provided to motion compensation module 309 for use in motion compensation. When a block references a particular reprojected reconstructed reference frame of the reprojected reconstructed reference frames, motion compensation module 309 may perform motion compensation by retrieving pixel data from any of the available reprojected reconstructed reference frames. For example, a first reprojected reconstructed reference frame generated by applying a first projective transformation to reconstructed reference frame 225 (e.g., using scene pose difference data between reconstructed reference frame 225 and input frame 224) and a second reprojected reconstructed reference frame generated by applying a second projective transformation to reconstructed reference frame 225 (e.g., using scene pose difference data between reconstructed reference frame 225 and a frame prior to input frame 224) and both be used as motion compensation reference frames. Alternatively or in addition, one or more projective transformations may be applied to other reconstructed reference frames (e.g., further past reconstructed reference frames) to generate one or more reprojected reconstructed reference frames.

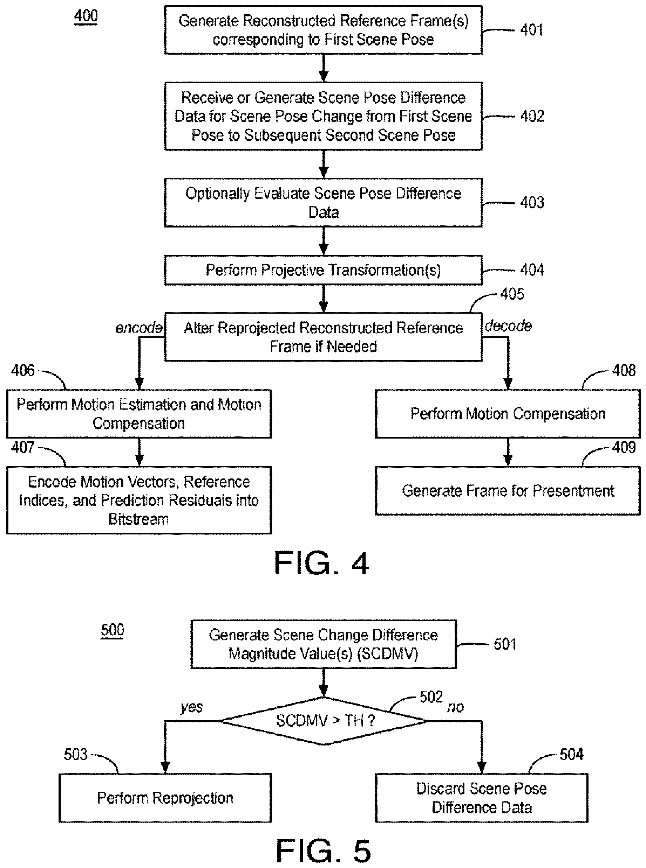

FIG. 4 is a flow diagram illustrating an example process 400 for coding video using reprojected reconstructed reference frames, arranged in accordance with at least some implementations of the present disclosure. Process 400 may include one or more operations 401-409 as illustrated in FIG. 4. Process 400 may form at least part of a video coding process. By way of non-limiting example, process 400 may form at least part of a video encoding process or video decoding process.

Process 400 begins at operation 401, where a reconstructed reference frame corresponding to a first scene pose is generated. The reconstructed reference frame may be reconstructed using any suitable technique or techniques. For example reference blocks for the frame may be determined using intra decoding and/or motion compensation techniques and each reference block may be combined with a prediction residual (if any) to form a reconstructed reference block. Reconstructed reference blocks may be combined or merged into a frame and the frame may be deblock filtered to generate the reconstructed reference frame. For example, the reconstructed reference frame may correspond to reconstructed reference frame 225 as discussed with respect to encoder 200 and decoder 300.

Processing may continue at operation 402, where scene pose difference data for a scene pose change from the first scene pose (corresponding to the reconstructed reference frame) and a second scene pose subsequent to the first scene pose (corresponding to a more recent evaluation of the scene) is received or generated. As discussed the scene pose difference data is indicative of a scene change pose over time. The scene pose difference data may be in any suitable format and may be applied to a frame as discussed with respect to operation 404. In an embodiment, the scene pose difference data is a transformation matrix. For example, each pixel coordinate or some pixel coordinates of a frame (e.g., a reconstructed reference frame) may be matrix multiplied by the transformation matrix to provide a new or reprojected pixel coordinates for the pixels such that a reprojected frame (e.g., a reprojected reconstructed reference frame) is generated. In an embodiment, the scene pose difference data is 6 degree of freedom differential data (e.g., Δx, Δy, Δz, Δα, Δβ, and Δγ values), which may be translated to a transformation matrix and/or applied to a frame (e.g., a reconstructed reference frame) to generate a reprojected frame (e.g., a reprojected reconstructed reference frame). In an embodiment, the scene pose difference data is a motion vector field, which may be applied to a frame (e.g., a reconstructed reference frame) to generate a reprojected frame (e.g., a reprojected reconstructed reference frame).

Processing may continue at operation 403, where the scene pose difference data may be optionally evaluated such that application of the scene pose difference data to the reconstructed reference fame is conditional on the evaluation. The scene pose difference data may be evaluated, for example, to determine whether the difference in scene pose is great enough to warrant the cost of performing the reprojection. For example, if the difference in scene pose or one or more or all magnitude values corresponding to the scene pose difference data is less than a threshold, reprojection may be skipped. In some embodiments, operation 403 may be performed at an encoder (e.g., encoder 200) while skipping reprojection at a decoder (e.g., decoder 300) may be performed responsive to a skip reprojection indicator in a bitstream (e.g., bitstream 235).

FIG. 5 is a flow diagram illustrating an example process 500 for conditionally applying frame reprojection based on evaluating scene pose difference data, arranged in accordance with at least some implementations of the present disclosure. Process 500 may include one or more operations 501-504 as illustrated in FIG. 5.

Process 500 begins at operation 501, where one or more scene change difference magnitude values (SCDMV) are generated. The scene change difference magnitude values may include any value or values indicative of a magnitude of the scene pose difference data (e.g., of the magnitude of the change in scene pose). For example, in the context of 6 degree of freedom differential data or any degree of freedom differential data, a scene change difference magnitude value may include a sum of squares of each degree of freedom difference or delta (e.g., Δx² + Δy² + Δz² + Δα² + Δβ² + Δγ²), a sum of squares of the translational components (e.g., Δx² + Δy² + Δz²), or the like. In the context of a translation matrix, a scene change difference magnitude value may include a sum of squares of the matrix coefficients or the like. In the context of a motion vector field, a scene change difference magnitude value may include mean absolute motion vector value for the motion vector field, a mean of the sum of the squares of the x and y components of the motion vectors in the motion vector field, or the like.

Processing may continue at operation 502, where the scene change difference magnitude value is compared to a threshold. As shown, if the scene change difference magnitude value corresponding to the scene pose difference data exceeds the threshold, processing continues at operation 503 where a projective transformation is applied to the corresponding reconstructed reference frame. If not, processing continues at operation 504 where the projective transformation is skipped and the scene pose difference data is discarded.

In the illustrated embodiment, a single scene change difference magnitude value is compared to a single threshold and a projective transformation is applied when the scene change difference magnitude value exceeds the threshold. In another embodiment, the projective transformation is applied when the scene change difference magnitude value meets or exceeds the threshold. In an embodiment, multiple scene change difference magnitude values must each meet or exceed their respective thresholds. In an embodiment, each degree of freedom employed is required to exceed a threshold for the projective transformation to be applied. In an embodiment, the scene change difference magnitude value(s) (e.g., one or more scene change difference magnitude values) must meet or exceed a first threshold and not exceed a second threshold for the projective transformation to be applied such that the first threshold is less than the second threshold.

Returning to discussion of FIG. 4, processing may continue at operation 404, where the projective transformation is applied. For example, the projective transformation may be applied conditionally based on the evaluation provided at operation 403 when such an evaluation is employed or in all instances where the evaluation is not used. The projective transformation may be applied using any suitable technique or techniques. For example, the application of the projective transformation may be dependent on the format of the scene pose difference data. In contexts where the scene pose difference data is or has been translated to a transformation matrix, each pixel coordinate or some pixel coordinates of the reconstructed reference frame may be matrix multiplied by the transformation matrix to provide a new or reprojected pixel coordinates for the pixels such that a reprojected frame (e.g., a reprojected reconstructed reference frame) is generated. When the scene pose difference data is 6 degree of freedom differential data (e.g., Δx, Δy, Δz, Δα, Δβ, and Δγ values) or differential data for fewer degrees of freedom or the like, the 6 degree of freedom differential data may be translated to a transformation matrix and/or applied to the reconstructed reference frame to generate a reprojected frame. In embodiments where the scene pose difference data is a motion vector field, the motion vector field may be applied to the reconstructed reference frame (e.g., on a block by block basis to relocate the pixels corresponding to each block to new locations based on the corresponding motion vector for the block. As discussed, the projective transformation applied at operation 404 may be based on a scene pose difference such that the scene pose difference changes over time.

FIG. 6 illustrates an example of multiple reprojected reconstructed reference frames for use in video coding, arranged in accordance with at least some implementations of the present disclosure As shown in FIG. 6, scene pose change context 600 includes a reconstructed reference frame 225 having reference scene pose 223 (P_{ref}) corresponding thereto as discussed herein. Reference scene pose 223 may be a scene pose at a time a frame corresponding to reconstructed reference frame 225 was presented to a user, a time for which a frame corresponding to reconstructed reference frame 225 was rendered, or the like. Also as illustrated in FIG. 6, a difference between reference scene pose 223 and current scene pose 221 (P_{curr}) provides scene pose difference data 601 (ΔP = P_{curr} - P_{ref}), which may be in any format discussed herein. Scene pose difference data 601 is applied to reconstructed reference frame 225 to generate reprojected reconstructed reference frame 226. As discussed, current scene pose 221 may be based on a more recent scene pose measurement or current scene pose 221 may be based on a projected scene pose (using extrapolation or similar techniques). Furthermore, scene pose difference data 601 (and/or current scene pose 221) may be used to render input frame 224 as discussed herein. As shown, reprojected reconstructed reference frame 226 is then used for motion estimation and motion compensation 602 (by encoder 200) or for motion compensation only (by decoder 300) for the coding of input frame 224. That is, reprojected reconstructed reference frame 226 is used as a motion compensation reference frame for the coding of input frame 224 as discussed herein.

Furthermore, as shown in scene pose change context 600, one or more additional reprojected reconstructed reference frames may be generated and used for motion estimation and motion compensation 602. For example, such motion estimation and motion compensation 602 may search a group of motion compensation reference frames 607 including one or more reprojected reconstructed reference frames as well as one or more reconstructed reference frames without reprojection (e.g., reconstructed reference frame 225). During the motion estimation search (e.g., at encoder 200), for a block of input frame 224, a best match block is found from any of motion compensation reference frames 607 and the best match block is referenced using a frame reference and a motion vector. During motion compensation (e.g., at encoder 200 or decoder 300), the frame reference and motion vector are used to access the best match block (e.g., the reference block) among motion compensation reference frames 607 and the best match block is added to a reconstructed prediction residual to form a reconstructed block, which is combined with other blocks to reconstruct a frame as discussed herein.

In an embodiment, a reconstructed reference frame 605 has a reference scene pose 604 (P_{ref2}) corresponding thereto such that reference scene pose 604 is prior to reference scene pose 223. Reference scene pose 604 may be a scene pose at a time a frame corresponding to reconstructed reference frame 605 was presented to a user, a time for which a frame corresponding to reconstructed reference frame 605 was rendered, or the like. A difference between reference scene pose 604 and current scene pose 221 (P_{curr}) provides scene pose difference data 610 (ΔP2 = P_{curr} - P_{ref2}), which may be in any format discussed herein. Scene pose difference data 610 is applied to reconstructed reference frame 605 to generate reprojected reconstructed reference frame 606. As shown, reprojected reconstructed reference frame 606 is then used for motion estimation and motion compensation 602 (by encoder 200) or for motion compensation only (by decoder 300) for the coding of input frame 224 as part of motion compensation reference frames 607. For example, the use of multiple reprojected reconstructed reference frames may improve coding efficiency with respect to input frame 224.

The projective transformations discussed herein may reproject or warp the reconstructed reference frame (or a portion thereof) in any suitable manner such as providing translation of objects in the frame, zoom in or zoom out effects for the frame, rotation of the frame, distortion of the frame, or the like. The reconstructed reference frame may be characterized as a reference frame, a reconstructed frame or the like and the reprojected reconstructed reference frame may be characterized as a warped reconstructed reference frame, a warped reference frame, a reprojected reference frame, or the like.

In some embodiments, after projective transformation, the reprojected or warped reference frame may be further processed prior to being provided as a motion estimation/compensation reference frame. For example, zoom in, zoom out, and rotation operations may provide for pixels that are moved outside of the footprint of the reconstructed reference frame (e.g., the original size and shape of reconstructed reference frame). In such contexts, pixels of the resultant frame after projective transformation may be altered, eliminated, or additional pixel values may be added to fill in gaps such that the reprojected reconstructed reference frame used for motion estimation/compensation reference has the same size and shape of the reconstructed reference frame (and the same size and shape of a frame to be coded using the reprojected reconstructed reference frame as a reference frame).

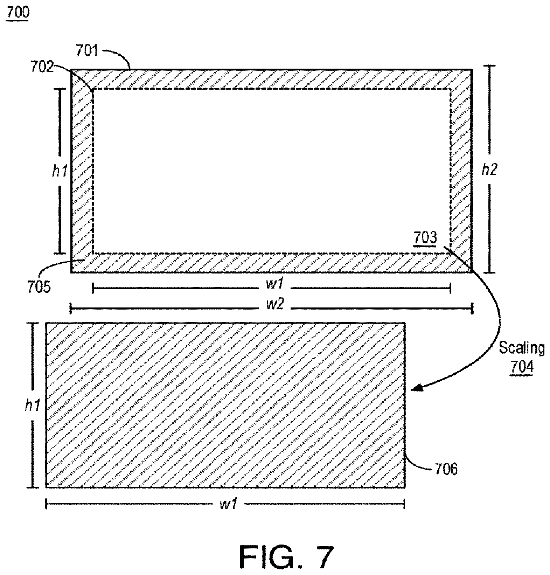

FIG. 7 illustrates example post processing 700 of a reprojected reconstructed reference frame after a zoom in operation, arranged in accordance with at least some implementations of the present disclosure. As shown in FIG. 7, after application of a projective transformation, a resultant reprojected reconstructed reference frame 701 has a size (e.g., h2xw2) that is greater than an original size (e.g., h1xw1) of the corresponding reconstructed reference frame 702 used to generate (via the discussed projective transformations) resultant reprojected reconstructed reference frame 701. Resultant reprojected reconstructed reference frame 701 may be characterized as a warped reconstructed reference frame, a resultant reconstructed reference frame, or the like.

As shown, in embodiments where resultant reprojected reconstructed reference frame 701 has a size that is greater than the original size of the reconstructed reference frame or where a portion of reprojected reconstructed reference frame 701 is outside of the original size of the reconstructed reference frame, a bounding box 703 having the same size and shape as the original size of the reconstructed reference frame (and the size and shape of an input frame to be coded) is applied to resultant reprojected reconstructed reference frame 701 and a scaling 704 is applied to the pixel values of resultant reprojected reconstructed reference frame 701 within bounding box 703 to generate reprojected reconstructed reference frame 706 having the same size, shape, and pixel density as the reconstructed reference frame (and the size and shape of an input frame to be coded). In the illustrated embodiment, bounding box 703 has the same size and shape as the original size of the reconstructed reference frame (and the size and shape of an input frame to be coded). In other embodiments, if supported by the implemented encode/decode architecture, a larger reprojected reconstructed reference frame 706 may be generated. For example, bounding box 703 may be larger than the original size of the reconstructed reference frame if a larger size is supported. In such examples, bounding box 703 has a size that is larger than the original size of the reconstructed reference frame up to a maximum supported reference frame size.

For example, a zoom in (e.g., moving closer to user perspective) projective transformation results in resultant reprojected reconstructed reference frame 701 being scaled to larger than the resolution of the original reconstructed reference frame 702. In such a context, encoder 200 and decoder 300 may still require a full resolution reference frame. However, the zoom in operation, as discussed, allocates a larger surface. By using the pitch and initial x, y coordinates of the reconstructed reference frame, bounding box 703 is applied to resultant reprojected reconstructed reference frame 701 and via scaling 704, reprojected reconstructed reference frame 706 having the full resolution is provided to encoder 200 and decoder 300 (e.g., within a frame buffer or the like) such that reprojected reconstructed reference frame 706, which may correspond to reprojected reconstructed reference frame 227, would thereby correspond to the reference frame native resolution. Such techniques allow the remainder of encoder 200 and decoder 300 to operate as normal with respect to motion estimation/compensation and the like. As will be appreciated, pixel information for boundary pixels 705 is lost using such techniques. However, as a similar scene pose will be used to generate the frame to be coded using reprojected reconstructed reference frame 706 as a reference frame (e.g., input frame 224/frame for presentment 230) such pixel information is expected to be unneeded during motion estimation/compensation.

Although illustrated with respect to a zoom in operation to generate resultant reprojected reconstructed reference frame 701, any transformation or warping the provides a frame that is larger than an original resolution or pixels outside of the original size of the reconstructed reference frame may be subjected to the discussed bounding box and scaling techniques to generate a reprojected reconstructed reference frame having the same resolution as the original reconstructed reference frame. For example, frame rotation transformations may provide pixels outside of the original reconstructed reference frame which may be eliminated prior to encode/decode processing. In other embodiments, after the discussed projective transformation resulting in a zoom in or similar effect, if supported by the encode/decode architecture, boundary pixels 705 or a portion thereof may be used motion estimation/compensation.

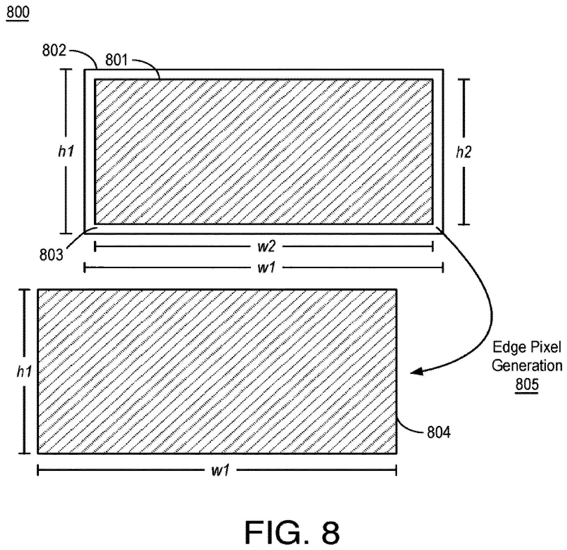

FIG. 8 illustrates example post processing 800 of a reprojected reconstructed reference frame after a zoom out operation, arranged in accordance with at least some implementations of the present disclosure. As shown in FIG. 8, after application of a projective transformation, a resultant reprojected reconstructed reference frame 801 has a size (e.g., h2xw2) that is greater than an original size (e.g., h1xw1) of the corresponding reconstructed reference frame 802 used to generate (via the discussed projective transformations) resultant reprojected reconstructed reference frame 801. Resultant reprojected reconstructed reference frame 801 may be characterized as a warped reconstructed reference frame, a resultant reconstructed reference frame, or the like.

As shown, in embodiments where resultant reprojected reconstructed reference frame 801 has a size that is less than the original size of reconstructed reference frame 802 or where a portion of reprojected reconstructed reference frame 801 is within and does not extend to an edge of reconstructed reference frame 802, an edge pixel generation operation 805 is applied to resultant reprojected reconstructed reference frame 801 to generate reprojected reconstructed reference frame 804 having the same size, shape, and pixel density as reconstructed reference frame 802 (and the size and shape of an input frame to be coded). In the illustrated embodiment, gap 803 between the outer edges (e.g., one or more edges) of reprojected reconstructed reference frame 801 and the corresponding edges of reconstructed reference frame 802 are filled with corresponding constructed pixel values of reprojected reconstructed reference frame 804. The constructed pixel values may be generated using any suitable technique or techniques such as pixel replication techniques or the like.

For example, a zoom out projective transformation results in resultant reprojected reconstructed reference frame 801 being scaled to smaller than the resolution of original reconstructed reference frame 802. As discussed with respect to zoom in operations above, encoder 200 and decoder 300 may still require a full resolution reference frame. For the zoom out illustrate in FIG. 8, edge pixels (e.g., pixels to fill gap 803) may be replicated as discussed to fill in the missing pixels. Such pixel replication may be performed by pixel copying, pixel value extrapolation, or the like. As shown, reprojected reconstructed reference frame 804 having the full resolution is provided to encoder 200 and decoder 300 (e.g., within a frame buffer or the like) such that reprojected reconstructed reference frame 804, which may correspond to reprojected reconstructed reference frame 226, would thereby correspond to the reference frame native resolution. Such techniques allow the remainder of encoder 200 and decoder 300 to operate as normal with respect to motion estimation/compensation and the like.

Although illustrated with respect to a zoom out operation to generate resultant reprojected reconstructed reference frame 601, any transformation or warping the provides a frame that is smaller than an original resolution may be subjected to the discussed pixel construction techniques to generate a reprojected reconstructed reference frame having the same resolution as the original reconstructed reference frame. For example, frame rotation transformations may provide pixel gaps with respect to the original reconstructed reference frame which may be constructed prior to encode/decode processing.

Furthermore, in some embodiments, with reference to FIG. 1, if system 100 generates rendered frames with barrel distorted, the reconstructed reference frames may be generated by removing the barrel distortion, applying reprojection (e.g., a projective transformation), and reapplying the barrel distortion. Such techniques generate reprojected reconstructed reference frames from the same perspective as the current view. Furthermore, warping from barrel distortion may change the size and shape of objects by a significant amount, which may be mitigated by removing barrel distortion for reprojection. As discussed herein, the reprojection creates a more similar view between the input frame and the reprojected reconstructed reference frame as compared to use of the reconstructed reference frame without reprojection.

Returning to discussion of operation 404 of FIG. 4, as discussed, in some embodiments, a projective transformation is applied to the entirety of the reconstructed reference frame to generate a resultant reprojected reconstructed reference frame. Such full frame projective transformation applications may provide for simplicity of implementation. In other embodiments, the projective transformation is applied only to a portion or portions of the reconstructed reference frame to generate a resultant reprojected reconstructed reference frame. For example, one or more objects or regions of interest or the like may be determined within the reprojected reconstructed reference frame such that the region or regions or interest are exclusive of a background of the reprojected reconstructed reference frame and the projective transformation may be applied only to the region or regions or interest or the background.

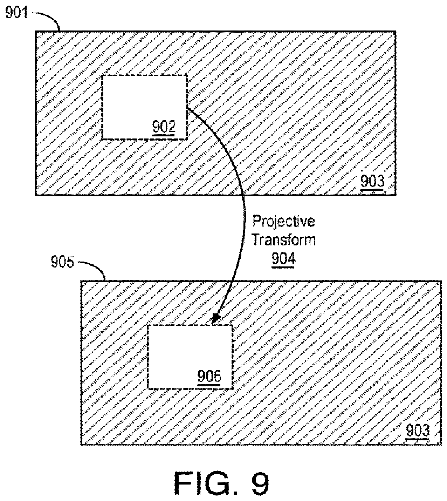

FIG. 9 illustrates an example projective transform applied only to a region of interest, arranged in accordance with at least some implementations of the present disclosure. As shown in FIG. 9, a region of interest 902 may be provided within a reconstructed reference frame 901 such that reconstructed reference frame 901 includes region of interest 902 and a background 903 exclusive of region of interest 902. Region of interest 902 may be determined or provided within reconstructed reference frame 901 using any suitable technique or techniques. In an embodiment, region of interest 902 (e.g., coordinates of region of interest 902) are provided by application module 101 to encoder 103 and to decoder 113 via communication link 131 (e.g., within bitstream 125 or side-banded with respect to bitstream 125). In some embodiments, region of interest 902 may be determined by application module 101 such that region of interest 902 is a rendered entity (e.g., a portion of a game or the like). In other embodiments, region of interest 902 may be determined using object detection, object tracking, or the like.

As shown, in an embodiment, projective transform 904 is applied only to region of interest 902 to generate a warped or reprojected region of interest 906 of reprojected reconstructed reference frame 905, and not to background 903. In other embodiments, projective transform 904 is applied only to background 903 to generate a warped or reprojected background of reprojected reconstructed reference frame 905, and not to region of interest 902. Such techniques may provide, for example, no warping or reprojection of objects that are known to be stationary with respect to a background that is being altered. For example, if an object moves with a viewer (e.g., a ball in front of viewer) while a background around the object moves with 6-DOF or the like as discussed herein, it may be advantageous to apply no projective transform to the ball (e.g., which is motionless within region of interest 902) while applying a projective transform to background 903. Similarly, when only region of interest 902 is being altered with respect to a viewer (e.g., such that background 903 is unchanged or merely panning), it may be advantageous to apply the projective transform only to object of interest 902 while leaving background 903 unchanged. In the illustrated embodiment, a single rectangular region of interest is provided. However, any number and shapes of regions of interest may be implemented.

Returning to FIG. 4, as discussed with respect to full frame projective transformations, operation 405 may be applied when the projective transform is applied only to region of interest 902 or background 903. For example, when region of interest expands as a result of the projective transform, it may be scaled to within the original size of region of interest 902. When region of interest is smaller than the size of region of interest 902 as result of the projective transform, pixels from background 903 may be used or pixel construction (e.g., replication) may be used to fill in the gaps.

Processing may continue from optional operation 405 along an encode path or a decode path as shown in process 400. For example, operations 401-405 are performed in the same manner by encoder 200 and decoder 300 such that both have the same reprojected reconstructed reference frame for use in motion compensation (e.g., as performed by motion compensation module 209 and motion compensation module 309, respectively). As will be appreciated, any mismatch between the motion compensation frame(s) used by encoder 200 and decoder 300 would cause corruption in the coding process.

For the encode process path, processing may continue at operation 406, where motion estimation and motion compensation are performed using the reprojected reconstructed reference frame(s) generated at operation 404 and/or operation 405. For example, as discussed with respect to encoder 200, a motion estimation search is performed (e.g., by motion estimation module 202) on a block by block basis for blocks of input frame 224 using the reprojected reconstructed reference frame(s) as motion compensation frames (e.g., by searching portions of some or all of the reprojected reconstructed reference frame(s)). Best match blocks are indicated by reference indices (e.g., indicating the reference frame if more than one is used) and motion vectors. Furthermore, motion compensation is performed (e.g., by motion compensation module 209) to reconstruct blocks by retrieving the best match blocks add adding corresponding reconstructed prediction residuals as discussed herein.

Processing may continue at operation 407, where the reference indices and motion vectors as well as the transformed and quantized prediction residuals (e.g., differences between the block of input frame 224 and the corresponding best match block after the differences are transformed and quantized) are encoded into a bitstream. The bitstream may be compliant to a standard (e.g., AVC, HEVC, etc.) or non-standards compliant as discussed herein.

For the decode process path, processing may continue at operation 408, where motion compensation is performed (e.g., by motion compensation module 209). For example, a bitstream such as the bitstream generated at operation 407 may be decoded to provide reference indices and motion vectors for motion compensation as well as reconstructed prediction residuals (e.g., decoded residuals after inverse quantization and inverse transform). Motion compensation is performed to reconstruct blocks by retrieving the best match blocks as indicated by the reference indices (to the reference frame if more than one is used including reprojected reconstructed reference frame(s) as discussed herein) and motion vectors and adding the corresponding reconstructed prediction residuals to the retrieved best match blocks.

Processing may continue at operation 409, where a frame for presentment is generated by reconstructing a frame using the reconstructed blocks generated at operation 408 as well as any intra decoded reconstructed blocks to generate a reconstructed frame. The reconstructed frame may be optionally deblock filtered to generate the reconstructed frame for presentment (as well as for reference for subsequent decoded frames). The reconstructed frame may be stored in a frame buffer for example for use as a reference frame and for display via a display device.

The discussed techniques may improve compression efficiency particularly in contexts with complex scene pose changes. For example, for the use case of a video sequence generated based on a user playing a game with the user moving closer to the objects in the game with inevitable head motion, the following improvements have been observed. The video sequences were encoded with constant quality (e.g., PSNR results are very similar as shown in Table 1 below). The first row in Table 1, labeled "Normal", corresponds to coding of the video sequence without use of the discussed reprojection techniques. The second row, labeled "Reference Frame Reprojection", corresponds to coding the same video sequence with the reference frame being reprojected based on scene pose difference data or information (e.g., based HMD movement) as discussed herein. As shown in Table 1, compression for the test sequence improved by over 50%. The encoding improves with more motion vectors finding better matches (e.g., 93% compared to 79% inter blocks or coding units (CU)) and fewer bits spent on motion vectors indicating the blocks find closer matches due to reprojection

| Experiment | Frame Resolution | Compressed size in kBytes | Motion vectors si ze in kBytes | Y PSNR | CU types in % | |
|---|---|---|---|---|---|---|
| | | | | | Intra | Inter |
| Normal | 1536x1776 | 63.7 | 6.4 | 30.633 | 21.32 | 78.68 |
| Reference Frame Reproj ection | 1536x1776 | 29.4 | 1.2 | 30.691 | 6.87 | 93.13 |

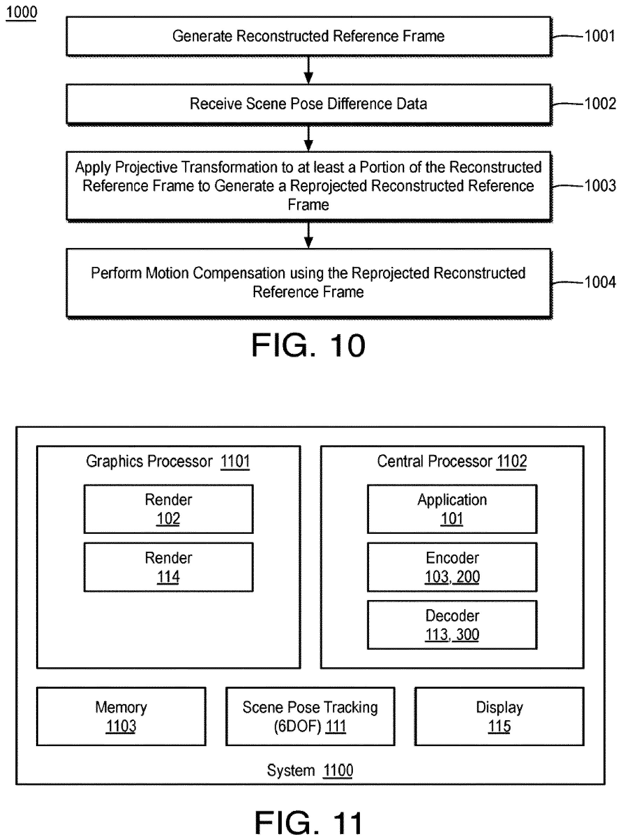

FIG. 10 is a flow diagram illustrating an example process 1000 for video coding using reprojected reconstructed reference frames, arranged in accordance with at least some implementations of the present disclosure. Process 1000 may include one or more operations 1001-1004 as illustrated in FIG. 10. Process 1000 may form at least part of a video coding process. By way of non-limiting example, process 1000 may form at least part of a video encoding process, video decoding process, video pre-processing, or video-post processing for video as undertaken by system 100 as discussed herein. Furthermore, process 1000 will be described herein in reference to system 1100 of FIG. 11.

FIG. 11 is an illustrative diagram of an example system 1100 for video coding using reprojected reconstructed reference frames, arranged in accordance with at least some implementations of the present disclosure. As shown in FIG. 11, system 1100 may include a graphics processor 1101, a central processor 1102, and a memory 1103. System 110 may also include scene pose tracking module 111 and/or display 115. Also as shown, graphics processor 1101 may include or implement render module 102 and/or render module 114. Furthermore, central processor 1102 may include or implement application module 101, encoder 103, 200, and/or decoder 113, 300. For example, as a system implemented to generate a compressed bitstream from rendered or captured frames (e.g., a host system or the like), system 1100 may include render module 102 and encoder 103, 200 (e.g., encoder 103 and/or encoder 200 or components of either or both). As a system implemented to decompress a bitstream to generate frames for presentment (e.g., a sink, display system, or the like), system 1100 may include render module 114, application module 101, decoder 113, 300 (e.g., decoder 113and/or decoder 300 or components of either or both), scene pose tracking module 111, and/or display 115. For example system 1100 may implement system 100 and/or system 110. In the example of system 1100, memory 1103 may store video content such as video frames, reproj ected reconstructed reference frames, bitstream data, scene pose data, scene pose difference data or any other data or parameters discussed herein.

Graphics processor 1101 may include any number and type of graphics processors or processing units that may provide the operations as discussed herein. Such operations may be implemented via software or hardware or a combination thereof. In an embodiment, the illustrated modules of graphics processor 1101 may be implemented via circuitry or the like. For example, graphics processor 1101 may include circuitry dedicated to render frames, to manipulate video data to generate a compressed bitstream, and/or circuitry dedicated to manipulate a compressed bitstream to generate video data to provide the operations discussed herein. For example, graphics processor 1101 may include an electronic circuit to manipulate and alter memory to accelerate the creation of video frames in a frame buffer and/or to manipulate and alter memory to accelerate the creation of a bitstream based on images or frames of video.

Central processor 1102 may include any number and type of processing units or modules that may provide control and other high level functions for system 1100 and/or provide the operations discussed herein. For example, central processor 1102 may include an electronic circuit to perform the instructions of a computer program by performing basic arithmetic, logical, control, input/output operations, and the like specified by the instructions.

Memory 1103 may be any type of memory such as volatile memory (e.g., Static Random Access Memory (SRAM), Dynamic Random Access Memory (DRAM), etc.) or non-volatile memory (e.g., flash memory, etc.), and so forth. In an embodiment, memory 1103 may be configured to store video data such as pixel values, control parameters, bitstream data, or any other video data, frame data, or any other data discussed herein. In a non-limiting example, memory 1103 may be implemented by cache memory. In an embodiment, one or more or portions of render module 102 and/or render module 114 may be implemented via execution units (EU) of graphics processor 1101. The execution units may include, for example, programmable logic or circuitry such as a logic core or cores that may provide a wide array of programmable logic functions. In an embodiment, render module 102 and/or render module 114 may be implemented via dedicated hardware such as fixed function circuitry or the like. Fixed function circuitry may include dedicated logic or circuitry and may provide a set of fixed function entry points that may map to the dedicated logic for a fixed purpose or function.

In the illustrated embodiment, render module 102 and/or render module 114 are implemented by graphics processor 1101. In other embodiments, one or both or components of render module 102 and/or render module 114 are implemented by central processor 1102. Similarly, in the illustrated embodiment, application module 101, encoder 103, 200, and decoder 113, 300 are implemented by central processor 1102. In other embodiments, one, some, all, or components of application module 101, encoder 103, 200, and decoder 113, 300 are implemented by graphics processor 1101. In some embodiments, one, some, all, or components of application module 101, encoder 103, 200, and decoder 113, 300 are implemented by a dedicated image or video processor.

Returning to discussion of FIG. 10, process 1000 may begin at operation 1001, where a reconstructed reference frame corresponding to a first scene pose is generated. The reconstructed reference frame may be generated using any suitable technique or techniques. For example, the reconstructed reference frame may be generated by determining reference blocks for the frame using intra decoding and/or motion compensation techniques (at an encoder or a decoder) and each reference block may be combined with a prediction residual (if any) to form reconstructed reference blocks. The reconstructed reference blocks may be combined or merged into a frame and the frame may be deblock filtered to generate the reconstructed reference frame. For example, the reconstructed reference frame may correspond to reconstructed reference frame 225 as discussed with respect to encoder 200 and/or decoder 300.

Processing may continue at operation 1002, where scene pose difference data indicative of a scene pose change from the first scene pose to a second scene pose subsequent to the first scene pose is received or generated. The scene pose difference data may include any suitable data format and may be received or generated using any suitable technique or techniques. In an embodiment, the scene pose difference data includes a transformation matrix, 6 degree of freedom differential data, a motion vector field, or the like as discussed herein.

In an embodiment, the scene pose difference data is generated based on a difference between the first scene pose and a measured second scene pose measured at a time subsequent to a time corresponding to the first scene pose. Furthermore, the second scene pose may be used to render a frame as discussed herein. In an embodiment, the scene pose difference data is predicted using extrapolation techniques or the like. In an embodiment, the scene pose difference data is predicted by extrapolating second scene pose difference data indicative of a second scene pose change from a third scene pose to the first scene pose such that the first scene pose is subsequent to the third scene pose.

Processing may continue at operation 1003, where a projective transformation is applied to at least a portion of the reconstructed reference frame based on the scene pose difference data to generate a reprojected reconstructed reference frame. The projective transformation may be applied using any suitable technique or techniques. In an embodiment, the projective transformation includes both an affine projection (e.g., an affine projection component) and a non-affine projection (e.g., a non-affine projection component), the non-affine-projection including at least one of a zoom projection, a barrel distortion projection, or a spherical rotation projection.

As discussed herein the projective transformation may be applied to an entirety of the reconstructed reference frame or only a portion of the reconstructed reference frame. In an embodiment, the projective transformation is applied to the entirety of the reconstructed reference frame. In an embodiment, process 1000 further includes determining a region of interest of the reconstructed reference frame and a background region of the reconstructed reference frame exclusive of the region of interest and applying the projective transformation includes applying the projective transformation only to the region of interest or only to the background of the reconstructed reference frame.

Furthermore, post-processing may be provided (after the projective transformation is applied) to generate the reprojected reconstructed reference frame (e.g., a finalized frame in a format to be used as a motion compensation reference frame). In an embodiment, applying the projective transformation includes applying a zoom-in transformation to the reconstructed reference frame to generate a first reprojected reconstructed reference frame having a size that is greater than a size of the reconstructed reference frame and process 1000 further includes applying a bounding box having the same size as the reconstructed reference frame to the first reprojected reconstructed reference frame and scaling a portion of the first reprojected reconstructed reference frame within the bounding box to the size and resolution of the reconstructed reference frame to generate the reprojected reconstructed reference frame. In an embodiment, applying the projective transformation includes applying a zoom-out transformation to the reconstructed reference frame to generate a first reprojected reconstructed reference frame having a size that is less than a size of the reconstructed reference frame and process 1000 further includes generating edge pixels adjacent to at least one edge of the first reprojected reconstructed reference frame to provide the reprojected reconstructed reference frame having the same size and resolution of the reconstructed reference frame. In an embodiment, applying the projective transformation includes applying a spherical rotation to the reconstructed reference frame to generate a first reprojected reconstructed reference frame and process 1000 further includes generating edge pixels adjacent to at least one edge of the first reprojected reconstructed reference frame to provide the reprojected reconstructed reference frame having the same size and resolution of the reconstructed reference frame.

In some embodiments, the projective transformation may be applied conditional to an evaluation of the scene pose difference data. In an embodiment, at least one scene change difference magnitude value corresponding to the scene pose difference data is compared to a threshold and applying the projective transformation to at least the portion of the reconstructed reference frame is conditional on the scene change difference magnitude value meeting or exceeding the threshold. In an embodiment, at least one scene change difference magnitude value corresponding to the scene pose difference data is compared to a first threshold and a second threshold greater than the first threshold and applying the projective transformation to at least the portion of the reconstructed reference frame is conditional on the scene change difference magnitude value meeting or exceeding the first threshold and not exceeding the second threshold.

In some embodiments, the discussed application of the projective transformation to the reconstructed reference frame may be performed simultaneously with other operations to reduce lag time or delay in processing. In an embodiment, process 1000 further includes at least one of rendering a second frame at least partially simultaneously with said applying the projective transformation or receiving a bitstream at least partially simultaneously with said applying the projective transformation.

Processing may continue at operation 1004, where motion compensation is performed to generate a current reconstructed frame using the reprojected reconstructed reference frame as a motion compensation reference frame. Such motion compensation may be performed at an encoder (e.g., as part of a local loop) or at a decoder. For example, motion vector and frame reference index information may be used to retrieve blocks from the reprojected reconstructed reference frame for use in reconstructing the current reconstructed frame.

In some embodiments, only the reprojected reconstructed reference frame is used as a motion compensation reference frame. In other embodiments, additional motion compensation reference frames are used. In an embodiment, performing the motion compensation further includes performing motion compensation on a block by block basis using both the reconstructed reference frame (e.g., without applying the projective transformation) and the reprojected reconstructed reference frame as motion compensation reference frames such that a first block of the current reconstructed frame references the reconstructed reference frame for motion compensation and a second block of the current reconstructed frame references the reprojected reconstructed reference frame for motion compensation. In an embodiment, process 1000 further includes generating a second reconstructed reference frame corresponding to a third scene pose such that the third scene pose is prior to the first scene pose, receiving second scene pose difference data indicative of a scene pose change from the third scene pose to the second scene pose, applying a second projective transformation to at least a portion of the second reconstructed reference frame based on the second scene pose difference data to generate a second reprojected reconstructed reference frame such that performing motion compensation for the current frame uses both the reprojected reconstructed reference frame and the second reprojected reconstructed reference frame as motion compensation reference frames.

Various components of the systems described herein may be implemented in software, firmware, and/or hardware and/or any combination thereof. For example, various components of systems 100, 110, 1100 may be provided, at least in part, by hardware of a computing System-on-a-Chip (SoC) such as may be found in a computing system such as, for example, a smart phone. Those skilled in the art may recognize that systems described herein may include additional components that have not been depicted in the corresponding figures. For example, the systems discussed herein may include additional components such as bit stream multiplexer or de-multiplexer modules and the like that have not been depicted in the interest of clarity.

While implementation of the example processes discussed herein may include the undertaking of all operations shown in the order illustrated, the present disclosure is not limited in this regard and, in various examples, implementation of the example processes herein may include only a subset of the operations shown, operations performed in a different order than illustrated, or additional operations.

In addition, any one or more of the operations discussed herein may be undertaken in response to instructions provided by one or more computer program products. Such program products may include signal bearing media providing instructions that, when executed by, for example, a processor, may provide the functionality described herein. The computer program products may be provided in any form of one or more machine-readable media. Thus, for example, a processor including one or more graphics processing unit(s) or processor core(s) may undertake one or more of the blocks of the example processes herein in response to program code and/or instructions or instruction sets conveyed to the processor by one or more machine-readable media. In general, a machine-readable medium may convey software in the form of program code and/or instructions or instruction sets that may cause any of the devices and/or systems described herein to implement the techniques, modules, components, or the like as discussed herein.

As used in any implementation described herein, the term "module" refers to any combination of software logic, firmware logic, hardware logic, and/or circuitry configured to provide the functionality described herein. The software may be embodied as a software package, code and/or instruction set or instructions, and "hardware", as used in any implementation described herein, may include, for example, singly or in any combination, hardwired circuitry, programmable circuitry, state machine circuitry, fixed function circuitry, execution unit circuitry, and/or firmware that stores instructions executed by programmable circuitry. The modules may, collectively or individually, be embodied as circuitry that forms part of a larger system, for example, an integrated circuit (IC), system on-chip (SoC), and so forth.

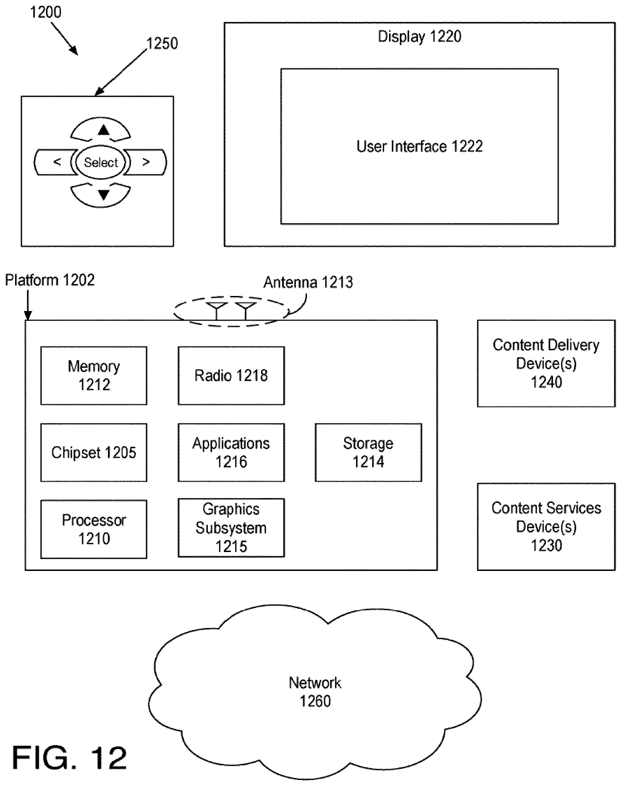

FIG. 12 is an illustrative diagram of an example system 1200, arranged in accordance with at least some implementations of the present disclosure. In various implementations, system 1200 may be a mobile system although system 1200 is not limited to this context. For example, system 1200 may be incorporated into a personal computer (PC), laptop computer, ultra-laptop computer, tablet, touch pad, portable computer, handheld computer, palmtop computer, personal digital assistant (PDA), cellular telephone, combination cellular telephone/PDA, television, smart device (e.g., smart phone, smart tablet or smart television), mobile internet device (MID), messaging device, data communication device, cameras (e.g. point-and-shoot cameras, super-zoom cameras, digital single-lens reflex (DSLR) cameras), virtual reality device, augmented reality device, and so forth.

In various implementations, system 1200 includes a platform 1202 coupled to a display 1220. Platform 1202 may receive content from a content device such as content services device(s) 1230 or content delivery device(s) 1240 or other similar content sources. A navigation controller 1250 including one or more navigation features may be used to interact with, for example, platform 1202 and/or display 1220. Each of these components is described in greater detail below.

In various implementations, platform 1202 may include any combination of a chipset 1205, processor 1210, memory 1212, antenna 1213, storage 1214, graphics subsystem 1215, applications 1216 and/or radio 1218. Chipset 1205 may provide intercommunication among processor 1210, memory 1212, storage 1214, graphics subsystem 1215, applications 1216 and/or radio 1218. For example, chipset 1205 may include a storage adapter (not depicted) capable of providing intercommunication with storage 1214.

Processor 1210 maybe implemented as a Complex Instruction Set Computer (CISC) or Reduced Instruction Set Computer (RISC) processors, x86 instruction set compatible processors, multi-core, or any other microprocessor or central processing unit (CPU). In various implementations, processor 1210 may be dual-core processor(s), dual-core mobile processor(s), and so forth.

Memory 1212 may be implemented as a volatile memory device such as, but not limited to, a Random Access Memory (RAM), Dynamic Random Access Memory (DRAM), or Static RAM (SRAM).

Storage 1214 may be implemented as a non-volatile storage device such as, but not limited to, a magnetic disk drive, optical disk drive, tape drive, an internal storage device, an attached storage device, flash memory, battery backed-up SDRAM (synchronous DRAM), and/or a network accessible storage device. In various implementations, storage 1214 may include technology to increase the storage performance enhanced protection for valuable digital media when multiple hard drives are included, for example.

Graphics subsystem 1215 may perform processing of images such as still or video for display. Graphics subsystem 1215 may be a graphics processing unit (GPU) or a visual processing unit (VPU), for example. An analog or digital interface may be used to communicatively couple graphics subsystem 1215 and display 1220. For example, the interface may be any of a High-Definition Multimedia Interface, DisplayPort, wireless HDMI, and/or wireless HD compliant techniques. Graphics subsystem 1215 may be integrated into processor 1210 or chipset 1205. In some implementations, graphics subsystem 1215 may be a stand-alone device communicatively coupled to chipset 1205.

The graphics and/or video processing techniques described herein may be implemented in various hardware architectures. For example, graphics and/or video functionality may be integrated within a chipset. Alternatively, a discrete graphics and/or video processor may be used. As still another implementation, the graphics and/or video functions may be provided by a general purpose processor, including a multi-core processor. In further embodiments, the functions may be implemented in a consumer electronics device.

Radio 1218 may include one or more radios capable of transmitting and receiving signals using various suitable wireless communications techniques. Such techniques may involve communications across one or more wireless networks. Example wireless networks include (but are not limited to) wireless local area networks (WLANs), wireless personal area networks (WPANs), wireless metropolitan area network (WMANs), cellular networks, and satellite networks. In communicating across such networks, radio 1218 may operate in accordance with one or more applicable standards in any version.

In various implementations, display 1220 may include any television type monitor or display. Display 1220 may include, for example, a computer display screen, touch screen display, video monitor, television-like device, and/or a television. Display 1220 may be digital and/or analog. In various implementations, display 1220 may be a holographic display. Also, display 1220 may be a transparent surface that may receive a visual projection. Such projections may convey various forms of information, images, and/or objects. For example, such projections may be a visual overlay for a mobile augmented reality (MAR) application. Under the control of one or more software applications 1216, platform 1202 may display user interface 1222 on display 1220.

In various implementations, content services device(s) 1230 may be hosted by any national, international and/or independent service and thus accessible to platform 1202 via the Internet, for example. Content services device(s) 1230 may be coupled to platform 1202 and/or to display 1220. Platform 1202 and/or content services device(s) 1230 may be coupled to a network 1260 to communicate (e.g., send and/or receive) media information to and from network 1260. Content delivery device(s) 1240 also may be coupled to platform 1202 and/or to display 1220.

In various implementations, content services device(s) 1230 may include a cable television box, personal computer, network, telephone, Internet enabled devices or appliance capable of delivering digital information and/or content, and any other similar device capable of uni-directionally or bi-directionally communicating content between content providers and platform 1202 and/display 1220, via network 1260 or directly. It will be appreciated that the content may be communicated uni-directionally and/or bi-directionally to and from any one of the components in system 1200 and a content provider via network 1260. Examples of content may include any media information including, for example, video, music, medical and gaming information, and so forth.

Content services device(s) 1230 may receive content such as cable television programming including media information, digital information, and/or other content. Examples of content providers may include any cable or satellite television or radio or Internet content providers. The provided examples are not meant to limit implementations in accordance with the present disclosure in any way.

In various implementations, platform 1202 may receive control signals from navigation controller 1250 having one or more navigation features. The navigation features of may be used to interact with user interface 1222, for example. In various embodiments, navigation may be a pointing device that may be a computer hardware component (specifically, a human interface device) that allows a user to input spatial (e.g., continuous and multi-dimensional) data into a computer. Many systems such as graphical user interfaces (GUI), and televisions and monitors allow the user to control and provide data to the computer or television using physical gestures.

Movements of the navigation features of may be replicated on a display (e.g., display 1220) by movements of a pointer, cursor, focus ring, or other visual indicators displayed on the display. For example, under the control of software applications 1216, the navigation features located on navigation may be mapped to virtual navigation features displayed on user interface 1222, for example. In various embodiments, may not be a separate component but may be integrated into platform 1202 and/or display 1220. The present disclosure, however, is not limited to the elements or in the context shown or described herein.

In various implementations, drivers (not shown) may include technology to enable users to instantly turn on and off platform 1202 like a television with the touch of a button after initial boot-up, when enabled, for example. Program logic may allow platform 1202 to stream content to media adaptors or other content services device(s) 1230 or content delivery device(s) 1240 even when the platform is turned "off." In addition, chipset 1205 may include hardware and/or software support for 5.1 surround sound audio and/or high definition 7.1 surround sound audio, for example. Drivers may include a graphics driver for integrated graphics platforms. In various embodiments, the graphics driver may include a peripheral component interconnect (PCI) Express graphics card.

In various implementations, any one or more of the components shown in system 1200 may be integrated. For example, platform 1202 and content services device(s) 1230 may be integrated, or platform 1202 and content delivery device(s) 1240 may be integrated, or platform 1202, content services device(s) 1230, and content delivery device(s) 1240 may be integrated, for example. In various embodiments, platform 1202 and display 1220 may be an integrated unit. Display 1220 and content service device(s) 1230 may be integrated, or display 1220 and content delivery device(s) 1240 may be integrated, for example. These examples are not meant to limit the present disclosure.

In various embodiments, system 1200 may be implemented as a wireless system, a wired system, or a combination of both. When implemented as a wireless system, system 1200 may include components and interfaces suitable for communicating over a wireless shared media, such as one or more antennas, transmitters, receivers, transceivers, amplifiers, filters, control logic, and so forth. An example of wireless shared media may include portions of a wireless spectrum, such as the RF spectrum and so forth. When implemented as a wired system, system 1200 may include components and interfaces suitable for communicating over wired communications media, such as input/output (I/O) adapters, physical connectors to connect the I/O adapter with a corresponding wired communications medium, a network interface card (NIC), disc controller, video controller, audio controller, and the like. Examples of wired communications media may include a wire, cable, metal leads, printed circuit board (PCB), backplane, switch fabric, semiconductor material, twisted-pair wire, co-axial cable, fiber optics, and so forth.

Platform 1202 may establish one or more logical or physical channels to communicate information. The information may include media information and control information. Media information may refer to any data representing content meant for a user. Examples of content may include, for example, data from a voice conversation, videoconference, streaming video, electronic mail ("email") message, voice mail message, alphanumeric symbols, graphics, image, video, text and so forth. Data from a voice conversation may be, for example, speech information, silence periods, background noise, comfort noise, tones and so forth. Control information may refer to any data representing commands, instructions or control words meant for an automated system. For example, control information may be used to route media information through a system, or instruct a node to process the media information in a predetermined manner. The embodiments, however, are not limited to the elements or in the context shown or described in FIG. 12.

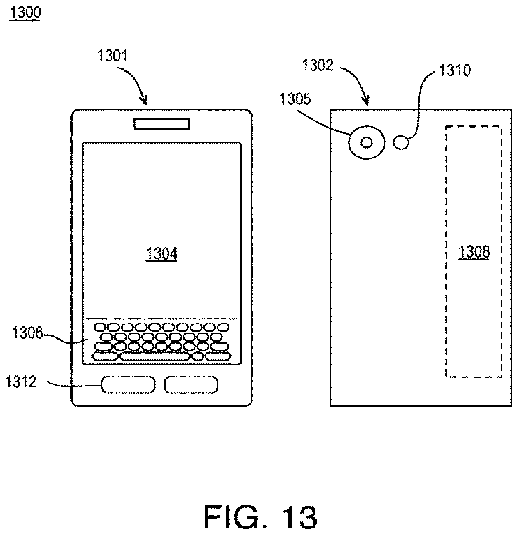

As described above, system 1200 may be embodied in varying physical styles or form factors. FIG. 13 illustrates an example small form factor device 1300, arranged in accordance with at least some implementations of the present disclosure. In some examples, system 1200 may be implemented via device 1300. In other examples, system 1100 or portions thereof may be implemented via device 1300. In various embodiments, for example, device 1300 may be implemented as a mobile computing device a having wireless capabilities. A mobile computing device may refer to any device having a processing system and a mobile power source or supply, such as one or more batteries, for example.

Examples of a mobile computing device may include a personal computer (PC), laptop computer, ultra-laptop computer, tablet, touch pad, portable computer, handheld computer, palmtop computer, personal digital assistant (PDA), cellular telephone, combination cellular telephone/PDA, smart device (e.g., smart phone, smart tablet or smart mobile television), mobile internet device (MID), messaging device, data communication device, cameras, and so forth.

Examples of a mobile computing device also may include computers that are arranged to be worn by a person, such as a wrist computers, finger computers, ring computers, eyeglass computers, belt-clip computers, arm-band computers, shoe computers, clothing computers, and other wearable computers. In various embodiments, for example, a mobile computing device may be implemented as a smart phone capable of executing computer applications, as well as voice communications and/or data communications. Although some embodiments may be described with a mobile computing device implemented as a smart phone by way of example, it may be appreciated that other embodiments may be implemented using other wireless mobile computing devices as well. The embodiments are not limited in this context.

As shown in FIG. 13, device 1300 may include a housing with a front 1301 and a back 1302. Device 1300 includes a display 1304, an input/output (I/O) device 1306, and an integrated antenna 1308. Device 1300 also may include navigation features 1312. I/O device 1306 may include any suitable I/O device for entering information into a mobile computing device. Examples for I/O device 1306 may include an alphanumeric keyboard, a numeric keypad, a touch pad, input keys, buttons, switches, microphones, speakers, voice recognition device and software, and so forth. Information also may be entered into device 1300 by way of microphone (not shown), or may be digitized by a voice recognition device. As shown, device 1300 may include a camera 1305 (e.g., including a lens, an aperture, and an imaging sensor) and a flash 1310 integrated into back 1302 (or elsewhere) of device 1300. In other examples, camera 1305 and flash 1310 may be integrated into front 1301 of device 1300 or both front and back cameras may be provided. Camera 1305 and flash 1310 may be components of a camera module to originate image data processed into streaming video that is output to display 1304 and/or communicated remotely from device 1300 via antenna 1308 for example.

Various embodiments may be implemented using hardware elements, software elements, or a combination of both. Examples of hardware elements may include processors, microprocessors, circuits, circuit elements (e.g., transistors, resistors, capacitors, inductors, and so forth), integrated circuits, application specific integrated circuits (ASIC), programmable logic devices (PLD), digital signal processors (DSP), field programmable gate array (FPGA), logic gates, registers, semiconductor device, chips, microchips, chip sets, and so forth. Examples of software may include software components, programs, applications, computer programs, application programs, system programs, machine programs, operating system software, middleware, firmware, software modules, routines, subroutines, functions, methods, procedures, software interfaces, application program interfaces (API), instruction sets, computing code, computer code, code segments, computer code segments, words, values, symbols, or any combination thereof. Determining whether an embodiment is implemented using hardware elements and/or software elements may vary in accordance with any number of factors, such as desired computational rate, power levels, heat tolerances, processing cycle budget, input data rates, output data rates, memory resources, data bus speeds and other design or performance constraints.

One or more aspects of at least one embodiment may be implemented by representative instructions stored on a machine-readable medium which represents various logic within the processor, which when read by a machine causes the machine to fabricate logic to perform the techniques described herein. Such representations, known as IP cores may be stored on a tangible, machine readable medium and supplied to various customers or manufacturing facilities to load into the fabrication machines that actually make the logic or processor.

## Claims

1. A computer-implemented method for video coding comprising:
generating (401, 1001) a reconstructed reference frame corresponding to a first scene pose, wherein the first scene pose indicates a pose of a scene in relation to a first viewpoint, wherein the first viewpoint corresponds to a first position and orientation of a system (110) for video coding in a 3-dimensional, 3D-, space relative to the scene;
determining position and orientation data (121) by tracking a location and orientation of the system (110) in the 3D-space;
generating (402, 1002) scene pose difference data (122) indicative of a scene pose change from the first scene pose to a second scene pose subsequent to the first scene pose, wherein the second scene pose is in relation to a second viewpoint corresponding to a second position and orientation of the system (110) in the 3D-space relative to the scene, and wherein the scene pose difference data is generated by tracking motion (111) of the system from the first position and orientation to the second position and orientation;
applying (404, 1003) a projective transformation (213, 313, 904) to at least a portion of the reconstructed reference frame using the scene pose difference data (122) to generate a reprojected reconstructed reference frame (226, 606, 701, 801, 804, 905); and
performing (406, 1004) motion compensation to generate a current reconstructed frame using the reprojected reconstructed reference frame (226, 606, 701, 801, 804, 905) as a motion compensation (209, 309) reference frame.

2. The method of claim 1, wherein the projective transformation (213, 313, 904) comprises both an affine projection and a non-affine projection, the non-affine-projection comprising at least one of a barrel distortion projection, or a spherical rotation projection and wherein the scene pose difference data comprises one of a transformation matrix, 6 degree of freedom differential data, or a motion vector field.

3. The method of claim 1 or 2, wherein the projective transformation (213, 313, 904) is applied to the entirety of the reconstructed reference frame and the method further comprises at least one of rendering a second frame at least partially simultaneously with said applying the projective transformation or receiving a bitstream at least partially simultaneously with said applying the projective transformation (213, 313, 904).

4. The method of any of claims 1 through 3, wherein said performing (406, 1004) motion compensation comprises performing motion compensation on a block by block basis using both the reconstructed reference frame and the reprojected reconstructed reference frame (226, 606, 701, 801, 804, 905) as motion compensation reference frames such that a first block of the current reconstructed frame references the reconstructed reference frame for motion compensation and a second block of the current reconstructed frame references the reprojected reconstructed reference frame (226, 606, 701, 801, 804, 905) for motion compensation.

5. The method of any of claims 1, 2, or 4, further comprising:
determining a region of interest (902) of the reconstructed reference frame and a background region of the reconstructed reference frame exclusive of the region of interest, wherein applying (404, 1003) the projective transformation (213, 313, 904) comprises applying the projective transformation (213, 313, 904) only to one of the region of interest or the background of the reconstructed reference frame.

6. The method of claim 1, wherein applying the projective transformation (213, 313, 904) comprises applying a zoom-in transformation to the reconstructed reference frame to generate a first reprojected reconstructed reference frame having a size that is greater than a size of the reconstructed reference frame and the method further comprises:
applying a bounding box having the same size as the reconstructed reference frame to the first reprojected reconstructed reference frame; and
scaling a portion of the first reprojected reconstructed reference frame within the bounding box to the size and resolution of the reconstructed reference frame to generate the reprojected reconstructed reference frame.

7. The method of claim 1, wherein applying the projective transformation comprises applying a zoom-out transformation to the reconstructed reference frame to generate a first reprojected reconstructed reference frame having a size that is less than a size of the reconstructed reference frame and the method further comprises:
generating (805) edge pixels adjacent to at least one edge of the first reprojected reconstructed reference frame to provide the reprojected reconstructed reference frame having the same size and resolution of the reconstructed reference frame.

8. The method of claim 1, wherein applying the projective transformation (213, 313, 904) comprises applying a spherical rotation to the reconstructed reference frame to generate a first reprojected reconstructed reference frame and the method further comprises:
generating (805) edge pixels adjacent to at least one edge of the first reprojected reconstructed reference frame to provide the reprojected reconstructed reference frame having the same size and resolution of the reconstructed reference frame.

9. The method of any of claims 1 through 8, further comprising:
predicting the scene pose difference data by extrapolating second scene pose difference data indicative of a second scene pose change from a third scene pose to the first scene pose, wherein the first scene pose is subsequent to the third scene pose.

10. The method of any of claims 1 through 9, further comprising:
determining a scene change difference magnitude value for the scene pose difference data, wherein the scene pose difference data comprises a plurality of movement degree of freedom delta values and the scene change difference magnitude value comprises a sum of squares of the movement degree of freedom delta values;
comparing the scene change difference magnitude value corresponding to the scene pose difference data to a threshold, wherein
applying the projective transformation to at least the portion of the reconstructed reference frame is conditional on the scene change difference magnitude value meeting or exceeding the threshold.

11. The method of any of claims 1 through 10, further comprising:
generating a second reconstructed reference frame corresponding to a third scene pose, wherein the third scene pose is prior to the first scene pose;
receiving second scene pose difference data indicative of a scene pose change from the third scene pose to the second scene pose; and
applying a second projective transformation to at least a portion of the second reconstructed reference frame using the second scene pose difference data to generate a second reprojected reconstructed reference frame, wherein
performing motion compensation for the current frame uses both the reprojected reconstructed reference frame and the second reprojected reconstructed reference frame as motion compensation reference frames.

12. A system (110) for video coding comprising:
a memory to store a reconstructed reference frame corresponding to a first scene pose, wherein the first scene pose indicates a pose of a scene in relation to a first viewpoint, wherein the first viewpoint corresponds to a first position and orientation of the system (110) in a 3-dimensional, 3D-, space relative to the scene;
a scene tracking module (111) configured to track the location and orientation of the system (110) in the 3D-space; and
a processor coupled to the memory, the processor to:
generate scene pose difference data (122) indicative of a scene pose change from the first scene pose to a second scene pose subsequent to the first scene pose, wherein the second scene pose is in relation to a second viewpoint corresponding to a second position and orientation of the system (110) in the 3D-space relative to the scene, and wherein the scene pose difference data is generated by tracking motion (111) of the system from the first position and orientation to the second position and orientation,
apply a projective transformation (213, 313, 904) to at least a portion of the reconstructed reference frame using scene pose difference data (122) to generate a reprojected reconstructed reference frame (226, 606, 701, 801, 804, 905), and
perform motion compensation to generate a current reconstructed frame using the reprojected reconstructed reference frame (226, 606, 701, 801, 804, 905) as a motion compensation reference frame.

13. The system of claim 12, wherein the projective transformation (213, 313, 904) comprises both an affine projection and a non-affine projection, the non-affine-projection comprising at least one of a barrel distortion projection, or a spherical rotation projection and wherein the scene pose difference data comprises one of a transformation matrix, 6 degree of freedom differential data, or a motion vector field.

14. An apparatus (1300), comprising means for performing a method as claimed in any preceding claim.

15. Machine-readable storage including machine-readable instructions which, when executed, implement a method as claimed in any preceding claim.

## Patentansprüche

1. Computerimplementiertes Verfahren zur Videocodierung, das Folgendes umfasst:
Erzeugen (401, 1001) eines rekonstruierten Referenzbildes, das einer ersten Szenenstellung entspricht, wobei die erste Szenenstellung eine Stellung einer Szene in Bezug auf einen ersten Sichtpunkt angibt, wobei der erste Sichtpunkt einer ersten Position und Orientierung eines Systems (110) für eine Videocodierung in einem 3-dimensionalen Raum, 3D-Raum, relativ zu der Szene entspricht;
Bestimmen von Positions- und Orientierungsdaten (121) durch Verfolgen eines Orts und einer Orientierung des Systems (110) in dem 3D-Raum;
Erzeugen (402, 10002) von Szenenstellungsunterschiedsdaten (122), die eine Szenenstellungsänderung von der ersten Szenenstellung zu einer zweiten Szenenstellung anschließend an die erste Szenenstellung angeben, wobei die zweite Szenenstellung in Beziehung zu einem zweiten Sichtpunkt steht, der einer zweiten Position und Orientierung des Systems (110) in dem 3D-Raum relativ zu der Szene entspricht, und wobei die Szenenstellungsunterschiedsdaten durch Verfolgen einer Bewegung (111) des Systems von der ersten Position und Orientierung zu der zweiten Position und Orientierung erzeugt werden;
Anwenden (404, 1003) einer Projektionstransformation (213, 313, 904) auf mindestens einen Teil des rekonstruierten Referenzbildes unter Verwendung der Szenenstellungsunterschiedsdaten (122), um ein reprojizierten rekonstruierten Referenzbild (226, 606, 701, 801, 804, 905) zu erzeugen; und
Ausführen (406, 1004) einer Bewegungskompensation, um ein aktuelles rekonstruiertes Bild unter Verwendung des reprojizierten rekonstruierten Referenzbildes (226, 606, 701, 801, 804, 905) als einem Bewegungskompensationsreferenzbild (209, 309) zu erzeugen.

2. Verfahren nach Anspruch 1, wobei die Projektionstransformation (213, 313, 904) sowohl eine affine Projektion als auch eine nicht affine Projektion umfasst, wobei die nicht affine Projektion eine Tonnenverzerrungsprojektion und/oder eine Projektion einer räumlichen Rotation umfasst und wobei die Szenenstellungsunterschiedsdaten eine Transformationsmatrix und/oder Differenzialdaten mit 6 Freiheitsgraden und/oder ein Bewegungsvektorfeld umfassen.

3. Verfahren nach Anspruch 1 oder 2, wobei die Projektionstransformation (213, 313, 904) auf die Gesamtheit des rekonstruierten Referenzbildes angewendet wird und das Verfahren ferner das Rendern eines zweiten Bildes zumindest teilweise gleichzeitig mit dem Anwenden der Projektionstransformation und/oder das Empfangen eines Bitstroms zumindest teilweise gleichzeitig mit dem Anwenden der Projektionstransformation (213, 313, 904) umfasst.

4. Verfahren nach einem der Ansprüche 1 bis 3, wobei das Ausführen (406, 1004) einer Bewegungskompensation umfasst, eine Bewegungskompensation auf einer Block-für-Block-Basis unter Verwendung sowohl des rekonstruierten Referenzbildes als auch des reprojizierten rekonstruierten Referenzbildes (226, 606, 701, 801, 804, 905) als Bewegungskompensationsreferenzbild auszuführen, so dass ein erster Block des aktuellen rekonstruierten Bildes das rekonstruierte Referenzbild für eine Bewegungskompensation referenziert und ein zweiter Block des aktuellen rekonstruierten Bildes das reprojizierte rekonstruierte Referenzbild (226, 606, 701, 801, 804, 905) für eine Bewegungskompensation referenziert.

5. Verfahren nach einem der Ansprüche 1, 2 oder 4, das ferner Folgendes umfasst:
Bestimmen eines interessierenden Bereichs (902) des rekonstruierten Referenzbildes und eines Hintergrundbereichs des rekonstruierten Referenzbildes ausschließlich des interessierenden Bereichs, wobei das Anwenden (404, 1003) der Projektionstransformation (213, 313, 904) umfasst, die Projektionstransformation (213, 313, 904) nur auf einen des interessierenden Bereichs und des Hintergrunds des rekonstruierten Referenzbildes anzuwenden.

6. Verfahren nach Anspruch 1 wobei das Anwenden der Projektionstransformation (213, 313, 904) umfasst, eine Heranzoomtransformation auf das rekonstruierte Referenzbild anzuwenden, um ein erstes reprojiziertes rekonstruiertes Referenzbild mit einer Größe, die größer als eine Größe des rekonstruierten Referenzbildes ist, zu erzeugen, und das Verfahren ferner Folgendes umfasst:
Anwenden eines Begrenzungsbildes mit derselben Größe wie das rekonstruierte Referenzbild auf das erste reprojizierte rekonstruierte Referenzbild; und
Skalieren eines Teils des ersten reprojizierten rekonstruierten Referenzbildes innerhalb des Begrenzungsbildes auf die Größe und Auflösung des rekonstruierten Referenzbildes, um das reprojizierte rekonstruierte Referenzbild zu erzeugen.

7. Verfahren nach Anspruch 1, wobei das Anwenden der Projektionstransformation umfasst, eine Herauszoomtransformation auf das rekonstruierte Referenzbild anzuwenden, um ein erstes reprojiziertes rekonstruiertes Referenzbild mit einer Größe, die kleiner als eine Größe des rekonstruierten Referenzbildes ist, zu erzeugen, und das Verfahren ferner Folgendes umfasst:
Erzeugen (805) von Randpixeln angrenzend an mindestens einen Rand des ersten reprojizierten rekonstruierten Referenzbildes, um das reprojizierte rekonstruierte Referenzbild mit derselben Größe und Auflösung des rekonstruierten Referenzbildes zu liefern.

8. Verfahren nach Anspruch 1, wobei das Anwenden der Projektionstransformation (213, 313, 904) umfasst, eine räumliche Rotation auf das rekonstruierte Referenzbild anzuwenden, um ein erstes reprojiziertes rekonstruiertes Referenzbild zu erzeugen, und das Verfahren ferner Folgendes umfasst:
Erzeugen (805) von Randpixeln angrenzend an mindestens einen Rand des ersten reprojizierten rekonstruierten Referenzbildes, um das reprojizierte rekonstruierte Referenzbild mit derselben Größe und Auflösung des rekonstruierten Referenzbildes zu liefern.

9. Verfahren nach einem der Ansprüche 1 bis 8, das ferner Folgendes umfasst:
Vorhersagen der Szenenstellungsunterschiedsdaten durch Extrapolieren zweiter Szenenstellungsunterschiedsdaten, die eine zweite Szenenstellungsänderung von einer dritten Szenenstellung zu der ersten Szenenstellung angeben, wobei die erste Szenenstellung auf die dritte Szenenstellung folgt.

10. Verfahren nach einem der Ansprüche 1 bis 9, das ferner Folgendes umfasst:
Bestimmen eines Szenenänderungsunterschieds-Größenwerts für die Szenenstellungsunterschiedsdaten, wobei die Szenenstellungsunterschiedsdaten mehrere Bewegungsfreiheitsgrad-Deltawerte umfassen und der Szenenänderungsunterschieds-Größenwert eine Summe von Quadraten der Bewegungsfreiheitsgrad-Deltawerte umfasst;
Vergleichen des Szenenänderungsunterschieds-Größenwerts, der den Szenenstellungsunterschiedsdaten entspricht, mit einem Schwellenwert, wobei
das Anwenden der Projektionstransformation auf mindestens einen Teil des rekonstruierten Referenzbildes davon abhängt, ob der Szenenänderungsunterschieds-Größenwert den Schwellenwert erfüllt oder überschreitet.

11. Verfahren nach einem der Ansprüche 1 bis 10, das ferner Folgendes umfasst.
Erzeugen eines zweiten rekonstruierten Referenzbildes, der einer dritten Szenenstellung entspricht, wobei die dritte Szenenstellung vor der ersten Szenestellung ist;
Empfangen zweiter Szenenstellungsunterschiedsdaten, die eine Szenenstellungsänderung von der dritten Szenenstellung zu der zweiten Szenenstellung angeben; und
Anwenden einer zweiten Projektionstransformation zumindest auf einen Teil des zweiten rekonstruierten Referenzbildes unter Verwendung der zweiten Szenenstellungsunterschiedsdaten, um ein zweites reprojiziertes rekonstruiertes Referenzbild zu erzeugen, wobei
das Ausführen der Bewegungskompensation für das aktuelle Bild sowohl das reprojizierte rekonstruierte Referenzbild als auch das zweite reprojizierte rekonstruierte Referenzbild als Bewegungskompensationsreferenzbild verwendet.

12. System (110) zur Videocodierung, das Folgendes umfasst:
einen Speicher, um ein rekonstruiertes Referenzbild zu speichern, das einer ersten Szenenstellung entspricht, wobei die erste Szenenstellung eine Stellung einer Szene in Bezug auf einen ersten Sichtpunkt angibt, wobei der erste Sichtpunkt einer ersten Position und Orientierung des Systems (110) in einem 3-dimensionalen Raum, 3D-Raum, relativ zu der Szene entspricht;
ein Szenenverfolgungsmodul (111), das konfiguriert ist, den Ort und die Orientierung des Systems (110) in dem 3D-Raum zu verfolgen;
einen Prozessor, der an den Speicher gekoppelt ist, wobei der Prozessor dient zum:
Erzeugen von Szenenstellungsunterschiedsdaten (122), die eine Szenenstellungsänderung von der ersten Szenenstellung zu einer zweiten Szenenstellung anschließend an die erste Szenenstellung angeben, wobei die zweite Szenenstellung in Bezug auf einen zweiten Sichtpunkt ist, der einer zweiten Position und Orientierung des Systems (110) in dem 3D-Raum relativ zu der Szene entspricht, und wobei die Szenenstellungsunterschiedsdaten durch Verfolgen einer Bewegung (111) des Systems von der ersten Position und Orientierung zu der zweiten Position und Orientierung erzeugt werden,
Anwenden einer Projektionstransformation (213, 313, 904) auf mindestens einen Teil des rekonstruierten Referenzbildes unter Verwendung der Szenenstellungsunterschiedsdaten (122), um ein reprojiziertes rekonstruiertes Referenzbild (226, 606, 701, 801, 804, 905) zu erzeugen; und
Ausführen einer Bewegungskompensation, um ein aktuelles rekonstruiertes Bild unter Verwendung des reprojizierten rekonstruierten Referenzbildes (226, 606, 701, 801, 804, 905) als ein Bewegungskompensationsreferenzbild zu erzeugen.

13. System nach Anspruch 12, wobei die Projektionstransformation (213, 313, 904) sowohl eine affine Projektion als auch eine nicht affine Projektion umfasst, wobei die nicht affine Projektion eine Tonnenverzerrungsprojektion und/oder eine Projektion einer räumlichen Rotation umfasst, und wobei die Szenenstellungsunterschiedsdaten eine Transformationsmatrix und/oder Differenzialdaten mit 6 Freiheitsgraden und/oder ein Bewegungsvektorfeld umfassen.

14. Vorrichtung (1300), die Mittel umfasst, um ein Verfahren nach einem vorhergehenden Anspruch auszuführen.

15. Maschinenlesbarer Speicher, der maschinenlesbare Anweisungen enthält, die dann, wenn sie ausgeführt werden, ein Verfahren nach einem vorhergehenden Anspruch implementieren.

## Revendications

1. Procédé mis en œuvre par ordinateur pour le codage vidéo comprenant les étapes suivantes :
générer (401, 1001) une trame de référence reconstruite correspondant à une première pose de scène, où la première pose de scène indique une pose d'une scène par rapport à un premier point de vue, où le premier point de vue correspond à des premières position et orientation d'un système (110) pour le codage vidéo dans un espace tridimensionnel, 3D, par rapport à la scène ;
déterminer des données de position et d'orientation (121) en suivant un emplacement et une orientation du système (110) dans l'espace 3D ;
générer (402, 1002) des données de différence de pose de scène (122) indicatives d'un changement de pose de scène de la première pose de scène à une deuxième pose de scène subséquente à la première pose de scène, où la deuxième pose de scène est en relation avec un deuxième point de vue correspondant à des deuxièmes position et orientation du système (110) dans l'espace 3D par rapport à la scène, et où les données de différence de pose de scène sont générées par le suivi du mouvement (111) du système des premières position et orientation aux deuxièmes position et orientation ;
appliquer (404, 1003) une transformation projective (213, 313, 904) à au moins une partie de la trame de référence reconstruite en utilisant les données de différence de pose de scène (122) pour générer une trame de référence reconstruite reprojetée (226, 606, 701, 801, 804, 905) ; et
effectuer (406, 1004) une compensation de mouvement pour générer une trame reconstruite courante en utilisant la trame de référence reconstruite reprojetée (226, 606, 701, 801, 804, 905) comme trame de référence de compensation de mouvement (209, 309).

2. Procédé selon la revendication 1, dans lequel la transformation projective (213, 313, 904) comprend à la fois une projection affine et une projection non affine, la projection non affine comprenant au moins une projection parmi une projection de distorsion en barillet ou une projection de rotation sphérique, et où les données de différence de pose de scène comprennent un élément parmi les suivants : une matrice de transformation, des données différentielles à 6 degrés de liberté ou un champ de vecteurs de mouvement.

3. Procédé selon la revendication 1 ou la revendication 2, dans lequel la transformation projective (213, 313, 904) est appliquée à la totalité de la trame de référence reconstruite et le procédé comprend en outre au moins l'une des opérations suivantes : effectuer le rendu d'une deuxième trame au moins partiellement en même temps que ladite application de la transformation projective ou recevoir un flux binaire au moins partiellement en même temps que ladite application de la transformation projective (213, 313, 904).

4. Procédé selon l'une quelconque des revendications 1 à 3, dans lequel ladite exécution (406, 1004) d'une compensation de mouvement comprend l'exécution d'une compensation de mouvement sur une base bloc par bloc en utilisant à la fois la trame de référence reconstruite et la trame de référence reconstruite reprojetée (226, 606, 701, 801, 804, 905) comme trames de référence de compensation de mouvement de manière à ce qu'un premier bloc de la trame reconstruite courante renvoie à la trame de référence reconstruite pour la compensation de mouvement et un deuxième bloc de la trame reconstruite courante renvoie à la trame de référence reconstruite reprojetée (226, 606, 701, 801, 804, 905) pour la compensation de mouvement.

5. Procédé selon l'une quelconque des revendications 1, 2 ou 4, comprenant en outre les étapes suivantes : déterminer une région d'intérêt (902) de la trame de référence reconstruite et une région d'arrière-plan de la trame de référence reconstruite à l'exclusion de la région d'intérêt, où l'application (404, 1003) de la transformation projective (213, 313, 904) comprend d'appliquer la transformation projective (213, 313, 904) à une seule région parmi la région d'intérêt ou l'arrière-plan de la trame de référence reconstruite.

6. Procédé selon la revendication 1, dans lequel l'application de la transformation projective (213, 313, 904) comprend l'application d'une transformation de zoom avant à la trame de référence reconstruite pour générer une première trame de référence reconstruite reprojetée ayant une taille qui est supérieure à la taille de la trame de référence reconstruite, et le procédé comprend en outre les étapes suivantes :
appliquer un cadre de contour ayant la même taille que la trame de référence reconstruite à la première trame de référence reconstruite reprojetée ; et
mettre à l'échelle une partie de la première trame de référence reconstruite reprojetée à l'intérieur du cadre de contour à la taille et à la résolution de la trame de référence reconstruite pour générer la trame de référence reconstruite reprojetée.

7. Procédé selon la revendication 1, dans lequel l'application de la transformation projective comprend l'application d'une transformation de zoom arrière à la trame de référence reconstruite pour générer une première trame de référence reconstruite reprojetée ayant une taille qui est inférieure à la taille de la trame de référence reconstruite, et le procédé comprend en outre l'étape suivante :
générer (805) des pixels de bord adjacents à au moins un bord de la première trame de référence reconstruite reprojetée pour fournir la trame de référence reconstruite reprojetée ayant la même taille et la même résolution que la trame de référence reconstruite.

8. Procédé selon la revendication 1, dans lequel l'application de la transformation projective (213, 313, 904) comprend l'application d'une rotation sphérique à la trame de référence reconstruite pour générer une première trame de référence reconstruite reprojetée, et le procédé comprend en outre l'étape suivante :
générer (805) des pixels de bord adjacents à au moins un bord de la première trame de référence reconstruite reprojetée pour fournir la trame de référence reconstruite reprojetée ayant la même taille et la même résolution que la trame de référence reconstruite.

9. Procédé selon l'une quelconque des revendications 1 à 8, comprenant en outre l'étape suivante :
prédire les données de différence de pose de scène en extrapolant des données de différence de deuxième pose de scène indicatives d'un changement de deuxième pose de scène d'une troisième pose de scène à la première pose de scène, où la première pose de scène est subséquente à la troisième pose de scène.

10. Procédé selon l'une quelconque des revendications 1 à 9, comprenant en outre les étapes suivantes :
déterminer une valeur d'amplitude de différence de changement de scène pour les données de différence de pose de scène, où les données de différence de pose de scène comprennent une pluralité de valeurs delta de degré de liberté de mouvement, et la valeur d'amplitude de différence de changement de scène comprend une somme de carrés des valeurs delta de degré de liberté de mouvement ;
comparer la valeur d'amplitude de différence de changement de scène correspondant aux données de différence de pose de scène à un seuil, où l'application de la transformation projective à au moins la partie de la trame de référence reconstruite est conditionnée par le fait que la valeur d'amplitude de différence de changement de scène atteigne ou dépasse le seuil.

11. Procédé selon l'une quelconque des revendications 1 à 10, comprenant en outre les étapes suivantes :
générer une deuxième trame de référence reconstruite correspondant à une troisième pose de scène, où la troisième pose de scène est antérieure à la première pose de scène ;
recevoir des données de différence de deuxième pose de scène indicatives d'un changement de pose de scène de la troisième pose de scène à la deuxième pose de scène ; et
appliquer une deuxième transformation projective à au moins une partie de la deuxième trame de référence reconstruite en utilisant les données de différence de deuxième pose de scène pour générer une deuxième trame de référence reconstruite reprojetée, où
effectuer à une compensation de mouvement pour la trame courante utilise à la fois la trame de référence reconstruite reprojetée et la deuxième trame de référence reconstruite reprojetée comme trames de référence de compensation de mouvement.

12. Système (110) de codage vidéo comprenant :
une mémoire pour stocker une trame de référence reconstruite correspondant à une première pose de scène, où la première pose de scène indique une pose d'une scène par rapport à un premier point de vue, où le premier point de vue correspond à des premières position et orientation du système (110) dans un espace tridimensionnel, 3D, par rapport à la scène ;
un module de suivi de scène (111) configuré pour suivre l'emplacement et l'orientation du système (110) dans l'espace 3D ; et
un processeur couplé à la mémoire, le processeur étant destiné à :
générer des données de différence de pose de scène (122) indicatives d'un changement de pose de scène de la première pose de scène à une deuxième pose de scène subséquente à la première pose de scène, où la deuxième pose de scène est en relation avec un deuxième point de vue correspondant à des deuxièmes position et orientation du système (110) dans l'espace 3D par rapport à la scène, et où les données de différence de pose de scène sont générées par le suivi du mouvement (111) du système des premières position et orientation aux deuxièmes position et orientation,
appliquer une transformation projective (213, 313, 904) à au moins une partie de la trame de référence reconstruite en utilisant les données de différence de pose de scène (122) pour générer une trame de référence reconstruite reprojetée (226, 606, 701, 801, 804, 905), et
effectuer une compensation de mouvement pour générer une trame reconstruite courante en utilisant la trame de référence reconstruite reprojetée (226, 606, 701, 801, 804, 905) comme trame de référence de compensation de mouvement.

13. Système selon la revendication 12, dans lequel la transformation projective (213, 313, 904) comprend à la fois une projection affine et une projection non affine, la projection non affine comprenant au moins une projection parmi une projection de distorsion en barillet ou une projection de rotation sphérique, et où les données de différence de pose de scène comprennent un élément parmi les suivants : une matrice de transformation, des données différentielles à 6 degrés de liberté ou un champ de vecteurs de mouvement.

14. Appareil (1300), comprenant des moyens pour exécuter un procédé tel que revendiqué dans l'une quelconque des revendications précédentes.

15. Mémoire lisible par machine comprenant des instructions lisibles par machine qui, lorsqu'elles sont exécutées, mettent en œuvre un procédé tel que revendiqué dans l'une quelconque des revendications précédentes.
